# EUROPÄISCHE PATENTANMELDUNG

(11) **EP 4 082 712 A1**
(43) Veröffentlichungstag der Anmeldung: **02.11.2022**
(21) Anmeldenummer: 22166767.8
(22) Anmeldetag: 05.04.2022
(51) Int. Cl.: B23K 26/03, B23K 26/06, B23K 26/082, B23K 26/08, B23K 26/28, G01B 5/00, G01B 9/02091, G01B 11/22, B23K 101/36

(54) **VERFAHREN ZUM ÜBERWACHEN EINES LASERBEARBEITUNGSPROZESSES UND DAZUGEHÖRIGES LASERBEARBEITUNGSSYSTEM**

(30) Priorität: 07.04.2021 DE 102021108662
(71) Anmelder: Precitec GmbH & Co. KG, 76571 Gaggenau-Bad Rotenfels (DE)
(72) Erfinder: Walde, Tom, 77652 Offenburg (DE); Moser, Rüdiger, 76316 Malsch (DE); Shkarban, Igor, 76287 Rheinstetten (DE); Miletic, Dejan, 68163 Mannheim (DE)
(74) Vertreter: Ter Meer Steinmeister & Partner

(57) **Zusammenfassung**

Ein Verfahren zum Bestimmen einer Tiefe einer Dampfkapillare während eines Laserbearbeitungsprozesses ist angegeben, das Verfahren umfassend: Einstrahlen eines Bearbeitungslaserstrahls auf zumindest ein Werkstück zum Ausbilden der Dampfkapillare, wobei der Bearbeitungslaserstrahl durch eine erste Ablenkvorrichtung entlang eines Bearbeitungspfads innerhalb eines ersten Scanfeldes der ersten Ablenkvorrichtung auf dem Werkstück abgelenkt wird, Einstrahlen eines optischen Messstrahls auf das Werkstück, wobei der optische Messstrahl durch eine zweite Ablenkvorrichtung relativ zum Bearbeitungslaserstrahl entlang eines Abtastpfads innerhalb eines Abtastbereichs auf dem Werkstück und anschließend zusammen mit dem Bearbeitungslaserstrahl durch die erste Ablenkvorrichtung abgelenkt wird, Erfassen von Abstands-Messwerten entlang des Abtastpfads basierend auf einem von dem Werkstück reflektierten Anteil des optischen Messstrahls, Bestimmen einer Tiefe und/oder einer Position einer der Dampfkapillare basierend auf den erfassten Abstands-Messwerten, wobei die Größe des Abtastbereichs basierend auf einer Position des Bearbeitungslaserstrahls und/oder basierend auf einer Ablenkung des Bearbeitungslaserstrahls durch die erste Ablenkvorrichtung bestimmt wird. Ferner ist ein dazugehöriges Laserbearbeitungssystem angegeben.

## Beschreibung

Die vorliegende Erfindung betrifft ein Verfahren zum Überwachen eines Laserbearbeitungsprozesses, insbesondere eines Laserschweißprozesses, und ein Laserbearbeitungssystem, insbesondere ein Laserschweißsystem, zum Überwachen eines Laserbearbeitungsprozesses.

### Hintergrund und Stand der Technik

In einem Laserbearbeitungssystem, auch als Laserbearbeitungsanlage oder kurz Anlage bezeichnet, wird zur Bearbeitung eines Werkstücks der von einer Laserstrahlquelle oder einem Ende einer Laserleitfaser austretende Bearbeitungslaserstrahl auf ein zu bearbeitendes Werkstück fokussiert. Die Bearbeitung kann ein Laserstrahlschweißen umfassen. Das Laserbearbeitungssystem kann einen Laserbearbeitungskopf, beispielsweise einen Laserschweißkopf, umfassen, in dem die Strahlführungsoptiken integriert sind. Zum Bearbeiten wird der Laserstrahl auf eine Oberfläche des Werkstücks eingestrahlt, wobei der Laserstrahl entlang eines sogenannten Bearbeitungspfads über die Oberfläche bewegt wird. Dabei bildet sich in einem Bereich zwischen der Oberfläche des Werkstücks, auf die der Laserstrahl eingestrahlt wird, bis hin zu einer gewissen Tiefe innerhalb des Werkstücks eine Dampfkapillare, auch als Keyhole bezeichnet, aus. Im Bereich der Dampfkapillare erhitzt sich das Material des Werkstücks durch die eingestrahlte Laserleistung so stark, dass es verdampft. Die Dampfkapillare ist von einem Bereich umgeben, in dem das Material in einem geschmolzenen Zustand ist. Dieser Bereich wird als Schmelzbad bezeichnet.

Die Tiefe der Dampfkapillare, also der Abstand zwischen der (unbearbeiteten) Oberfläche des Werkstücks und der tiefsten Stelle der Dampfkapillare, ist von großem Interesse. Die Tiefe der Dampfkapillare steht beispielsweise im Zusammenhang mit einer Einschweißtiefe, also der Tiefe, bis zu der das Material des Werkstücks während der Bearbeitung aufgeschmolzen wurde. Einerseits lässt die Kenntnis über die Tiefe der Dampfkapillare bzw. die Einschweißtiefe Rückschlüsse über die Festigkeit einer Schweißverbindung zu, d.h. ob ausreichend tief eingeschweißt wurde, andererseits kann über die Kenntnis der Tiefe der Dampfkapillare sichergestellt werden, dass die Schweißnaht an der Unterseite nicht sichtbar ist, also keine unerwünschte Durchschweißung vorliegt. Die Tiefe der Dampfkapillare, auch als Keyholetiefe bezeichnet, ist also ein entscheidender Faktor für die Qualität der resultierenden Schweißung beim Laserstrahlschweißen. Die tiefste Stelle der Dampfkapillare wird auch als Keyholeboden oder Bearbeitungsgrund bezeichnet.

Aus diesem Grund ist die Messung der Tiefe der Dampfkapillare während des Laserstrahlschweißens von großem Interesse. Neuerdings erfolgen Tiefen- bzw. Abstandsmessungen kontaktlos mittels optischer Kohärenztomographie (englisch "optical coherence tomography", kurz "OCT"). Hierfür wird ein optischer Messstrahl, auch als OCT-Messstrahl bezeichnet, eines optischen Kohärenztomographen auf das Werkstück eingestrahlt und ein Teil des optischen Messstrahls wird vom Werkstück in den optischen Kohärenztomographen zurück reflektiert. Um die Tiefe der Dampfkapillare zuverlässig messen zu können, muss jedoch sichergestellt sein, dass der optische Messstrahl an einer tiefsten Stelle in die Dampfkapillare trifft und das von dort reflektierte Licht wieder zurück in den optischen Kohärenztomographen gelangt.

Im Allgemeinen ist die Position der tiefsten Stelle der Dampfkapillare nicht identisch mit der Position des Bearbeitungslaserstrahls. Die Position, Form und Größe der Dampfkapillare auf der Werkstückoberfläche hängen von den aktuellen Parametern des Laserbearbeitungsprozesses ab. Dazu zählen beispielsweise die Bearbeitungsgeschwindigkeit, auch Vorschubgeschwindigkeit genannt, die Bearbeitungsrichtung, die Leistung des Bearbeitungslaserstrahls, die Fokusgröße des Bearbeitungslaserstrahls, das Material des Werkstücks, etc.. Beispielsweise hat eine Erhöhung der Bearbeitungsgeschwindigkeit zur Folge, dass sich ein Abstand zwischen der Position der Dampfkapillare und der Position des Bearbeitungslaserstrahls vergrößert.

Aus diesem Grund ist eine der größten Herausforderungen, den OCT-Messstrahl so auf dem Werkstück zu positionieren, dass damit zuverlässig die tiefste Stelle der Dampfkapillare ermittelt werden kann. Werden als Laserbearbeitungssystem für ein Laserstrahlschweißen sogenannte Scannersysteme, bei denen der Bearbeitungslaserstrahl den Bearbeitungspfad mittels Scanspiegel oder anderer Ablenkeinheiten abfährt, verwendet, ist dieses Problem nochmals vergrößert. Denn eine chromatische Aberration und veränderliche Winkel des Bearbeitungslaserstrahls und des OCT-Messstrahls zum Objektiv und zum Werkstück bewirken, dass sich der OCT-Messstrahl an einer anderen Position auf dem Werkstück befindet als der Bearbeitungslaserstrahl. Weiterhin wird bei Scannersystemen, insbesondere scannerbasierten Schweißsystemen, häufig mit hohen Bearbeitungsgeschwindigkeiten gearbeitet, weshalb typischerweise der Versatz zwischen der Position der Dampfkapillare und der Position bzw. dem Fokus des Bearbeitungslasers deutlich größer ist als bei Festoptiksystemen. Verschärft wird diese Problematik durch sich häufig ändernde Schweißrichtungen und -geschwindigkeiten.

Hinzu kommen weitere Effekte, wie die Polarisationsabhängigkeit der Reflektion von Spiegeln der Scannersysteme, thermische Einflüsse, Bewegungen externer Achsen, an welchen sich das Scannersysteme oder das Werkstück befinden und damit verbundene Schwingungen, sowie schwankende Materialeigenschaften der Fügepartner, welche die Messungen ungünstig beeinflussen können.

Typische Scannersysteme mit einem optischen Kohärenztomographen zur Messung der Keyholetiefe versuchen durch ein Scannen des OCT-Messstrahls rund um die Position des Bearbeitungslaserstrahls auf dem Werkstück das Keyhole "zufällig" zu treffen. Dieses Scannen erfolgt typischerweise mit einem starren Muster (z.B. Kreis, liegende 8, Spirale). Dies bedeutet, dass bei den meisten Messungen (typische Messfrequenzen liegen im Bereich 10kHz bis 500kHz) der OCT-Messstrahl nicht in das Keyhole trifft und die wenigen Messungen aus dem Keyhole aus der Menge aller Messungen herausgefiltert werden müssen. Da das Scanmuster fest vorgegeben ist, muss die Größe des Scanmusters, d.h. der Scanbereich, an die Prozesssituation angepasst sein, in der die Position des Keyholes am ungewissesten ist. Somit wird in der Regel ein großer Scanbereich für das Scanmuster vorgegeben, der durch den Messtrahl in kurzer Zeit abgescannt werden muss. Dies führt dazu, dass der Anteil der Messungen aus dem Keyhole mit zunehmender Scanbereichsgröße geringer wird. Werden nun Schweißungen durchgeführt, bei welchen sich nur kleine Keyhole-Durchmesser ausbilden, so verschlechtert sich dieses Verhältnis weiter.

Die Ursache für die abnehmende Qualität der Messungen ist darin begründet, dass einerseits die Messfrequenz, mit welcher der optische Kohärenztomograph arbeiten kann, begrenzt ist und andererseits die Intensität des OCT-Messstrahls limitiert ist. Beides führt dazu, dass mit zunehmender Größe des Scanbereichs für den OCT-Messstrahl immer weniger Signale von der tiefsten Stelle des Keyholes generiert werden und ab einer bestimmten Größe des Scanbereichs schließlich nicht mehr genügend Messungen aus dem Keyhole erhalten werden, um eine hinreichend genaue Aussage zur Keyholetiefe machen zu können.

### Offenbarung der Erfindung

Es ist eine Aufgabe der vorliegenden Offenbarung, ein System und ein Verfahren anzugeben, womit eine Zuverlässigkeit, eine Geschwindigkeit und eine Genauigkeit einer Bestimmung einer Tiefe und/oder -Position der Dampfkapillare während eines Laserbearbeitungsprozesses erhöht werden können.

Die Aufgabe wird durch den Gegenstand der unabhängigen Ansprüche gelöst. Vorteilhafte Ausgestaltungen und Weiterbildungen sind Gegenstand abhängiger Ansprüche.

Der Grundgedanke der Erfindung beruht darauf, während eines Laserbearbeitungsprozesses den Bereich des Werkstücks zu bestimmen oder einzuschränken, der von einem optischen Messstrahl für eine interferometrische bzw. optische Abstandsmessung (z.B. zur optischen Kohärenztomographie) abgetastet oder gescannt werden muss. Die Bestimmung dieses Bereichs, im Folgenden auch Abtastbereich genannt, erfolgt dadurch, dass der Abtastbereich, beispielsweise eine Größe, Position und Form des Abtastbereichs, basierend auf zumindest einem aktuellen (Prozess-)Parameter des Laserbearbeitungsprozesses bestimmt oder angepasst wird. Insbesondere kann der Abtastbereich, in dem der optische Messstrahl die Werkstückoberfläche abtastet, basierend auf einer Position des Laserbearbeitungsstrahls innerhalb eines ersten Scanfelds einer ersten Ablenkvorrichtung zum Ablenken des Laserbearbeitungsstrahls entlang eines vorgegebenen Bearbeitungspfads angepasst werden. Dadurch kann eine Wahrscheinlichkeit einer Falschmessung, d.h. einer Messung außerhalb der Dampfkapillare, reduziert werden.

Der Abtastbereich kann auch als Suchbereich bzw. Scanbereich bezeichnet werden und kann einen Bereich auf dem Werkstück bzw. der Werkstückoberfläche angeben, innerhalb dessen das Werkstück durch den optischen Messstrahl zum Bestimmen einer Position und Tiefe der Dampfkapillare abgetastet wird. Der Abtastbereich kann in Bezug auf den Laserbearbeitungsstrahl stationär sein. Somit kann der Abtastbereich dem Bearbeitungsstrahl folgen, der entlang dem Bearbeitungspfad ausgelenkt wird. Das Abtasten kann durch Einstrahlen und Ablenken des optischen Messstrahls entlang eines Abtastpfads innerhalb des Abtastbereichs und das Erfassen von Abstands-Messwerten entlang des Abtastpfads basierend auf einem von dem Werkstück zurückreflektierten Anteil erfolgen. Die Position der Dampfkapillare und/oder die Tiefe der Dampfkapillare kann anschließend basierend auf den erfassten Abstands-Messwerten bestimmt werden. Die Position der Dampfkapillare kann als Position der tiefsten Stelle der Dampfkapillare und die Tiefe der Dampfkapillare kann als Abstand zwischen der (unbearbeiteten) Oberfläche des Werkstücks und der tiefsten Stelle der Dampfkapillare definiert sein.

Die Größe des Abtastbereichs kann die Fläche des Abtastbereichs auf dem Werkstück bezeichnen. Die Form des Abtastbereichs kann die Geometrie des Abtastbereichs bezeichnen, d.h. die Form kann beim Ändern der Größe invariant sein. Die Position des Abtastbereichs kann als eine Position eines Mittelpunkts bzw. eines Flächenschwerpunkts des Abtastbereichs auf dem Werkstück definiert sein.

Statt mit dem optischen Messstrahl den Bereich um den Bearbeitungslaserstrahl, auch als Bearbeitungsfeld bezeichnet, mit einer fest vorgegebenen Abtastfigur abzufahren oder abzutasten, wird bei der vorliegenden Offenbarung der Abtastbereich, in dem die Dampfkapillare gesucht wird, also signifikant reduziert. Außerdem kann die Fokuslage des optischen Messstrahls, z.B. abhängig von seiner Position auf dem Werkstück oder von seiner Position innerhalb des ersten und/oder zweiten Scanfelds, angepasst werden. Bei ansonsten unveränderten Parametern der interferometrischen Abstandsmessung ergibt sich erstens eine höhere Signalintensität des von der Dampfkapillare reflektierten Anteils des optischen Messstrahls und damit ein besseres Signal-Rausch-Verhältnis. Zweitens werden deutlich mehr Abstands-Messwerte "aus der Dampfkapillare" erhalten, da der optische Messstrahl häufiger über die Dampfkapillare gefahren wird. Insbesondere ergeben sich für einen Laserschweißprozess mehr Messwerte aus der Dampfkapillare pro Längeneinheit einer erzeugten Schweißnaht.

Gemäß einem ersten Aspekt der vorliegenden Offenbarung ist ein Verfahren zum Überwachen eines Laserbearbeitungsprozesses bzw. zum Bestimmen einer Tiefe und/oder Position einer Dampfkapillare während eines Laserbearbeitungsprozesses, angegeben, das Verfahren umfassend: Einstrahlen eines Bearbeitungslaserstrahls auf zumindest ein Werkstück zum Ausbilden der Dampfkapillare, wobei der Bearbeitungslaserstrahl durch eine erste Ablenkvorrichtung entlang eines Bearbeitungspfads innerhalb eines ersten Scanfelds auf dem Werkstück abgelenkt wird, Einstrahlen eines optischen Messstrahls auf das Werkstück, wobei der optische Messstrahl durch eine zweite Ablenkvorrichtung relativ zum Bearbeitungslaserstrahl entlang eines Abtastpfads innerhalb eines Abtastbereichs auf dem Werkstück und anschließend zusammen mit dem Bearbeitungslaserstrahl durch die erste Ablenkvorrichtung abgelenkt wird, Erfassen von Abstands-Messwerten entlang des Abtastpfads basierend auf einem von dem Werkstück reflektierten Anteil des optischen Messstrahls, insbesondere mittels optischer Kohärenztomographie, Bestimmen einer Tiefe und/oder einer Position einer Dampfkapillare basierend auf den erfassten Abstands-Messwerten, wobei eine Größe des Abtastbereichs basierend auf zumindest einem Parameter bestimmt oder angepasst wird. Mit anderen Worten kann der Abtastbereich für den optischen Messstrahl an die jeweilige Bearbeitungssituation, d.h. basierend auf dem zumindest einem Parameter, so angepasst werden, dass er minimal ist.

Dabei wird die Größe des Abtastbereichs basierend auf zumindest einem der folgenden Parameter bestimmt oder angepasst: eine Position des Bearbeitungslaserstrahls auf dem Werkstück, eine Position des Bearbeitungslaserstrahls innerhalb des ersten Scanfelds, ein Winkel oder eine Ausrichtung des Bearbeitungslaserstrahls bezüglich des Werkstücks, eine Ablenkung des Bearbeitungslaserstrahls durch die erste Ablenkvorrichtung, eine Bearbeitungsrichtung, eine Bearbeitungsgeschwindigkeit, ein Bearbeitungsgeschwindigkeitsvektor bzw. ein Geschwindigkeitsvektor des Bearbeitungsstrahls, eine Leistung des Bearbeitungslaserstrahls, ein Material und/oder eine Dicke des zumindest einen Werkstücks, ein Ablenkwinkel der ersten Ablenkvorrichtung, eine optische Weglänge des Bearbeitungslaserstrahls zwischen einer Laserquelle für den Bearbeitungslaserstrahl und dem zumindest einen Werkstück, eine optische Weglänge des optischen Messstrahls zwischen einer Strahlungsquelle des optischen Messstrahls und dem zumindest einen Werkstück, eine Fokuslage des Bearbeitungslaserstrahls, eine Fokuslage des optischen Messstrahls, eine Querschnittsform des Bearbeitungslaserstrahls, insbesondere eine Querschnittsform des Bearbeitungslaserstrahls im Fokus, eine Querschnittsform des optischen Messstrahls, insbesondere eine Querschnittsform des optischen Messstrahls im Fokus, und eine Ausrichtung des Laserbearbeitungssystems, insbesondere des Laserbearbeitungskopfes, und des Werkstücks zueinander.

Gemäß einem zweiten Aspekt der vorliegenden Offenbarung ist ein Laserbearbeitungssystem, insbesondere ein Laserschweißsystem, angegeben. Das Laserbearbeitungssystem umfasst: einen Laserbearbeitungskopf zum Einstrahlen eines Bearbeitungslaserstrahls auf zumindest ein Werkstück zum Ausbilden einer Dampfkapillare, wobei der Laserbearbeitungskopf eine erste Ablenkvorrichtung zum Ablenken des Bearbeitungslaserstrahls entlang eines Bearbeitungspfads innerhalb eines ersten Scanfelds auf dem Werkstück umfasst, eine Messvorrichtung zur interferometrischen Abstandsmessung, insbesondere mittels optischer Kohärenztomographie, die eingerichtet ist zum Einstrahlen eines optischen Messstrahls auf das zumindest eine Werkstück, und eine zweite Ablenkvorrichtung zum Ablenken des optischen Messstrahls relativ zum Bearbeitungslaserstrahl entlang eines Abtastpfads innerhalb eines Abtastbereichs auf dem Werkstück, eine Einkopplungsvorrichtung zum Einkoppeln des optischen Messstrahls in den Laserbearbeitungskopf, die in Strahlausbreitungsrichtung des Bearbeitungslaserstrahls vor der ersten Ablenkvorrichtung angeordnet ist, sodass der optische Messstrahl zusammen mit dem Bearbeitungslaserstrahl durch die erste Ablenkvorrichtung auslenkbar ist, wobei die Messvorrichtung eingerichtet ist, Abstands-Messwerte entlang des Abtastpfads basierend auf einem von dem Werkstück reflektierten Anteil des optischen Messstrahls zum Bestimmen einer Tiefe und/oder einer Position der Dampfkapillare zu erfassen.

Die Messvorrichtung kann eingerichtet sein, um die Größe des Abtastbereichs basierend auf zumindest einem der zuvor genannten Parameter zu bestimmen oder anzupassen.

Das Laserbearbeitungssystem bzw. eine darin enthaltene Steuereinheit kann eingerichtet sein, um das Verfahren zum Bestimmen der Tiefe einer Dampfkapillare gemäß Ausführungsformen durchzuführen.

Die Parameter können aktuelle Parameter während des Laserschweißprozesses sein. Das Verfahren kann während des Laserbearbeitungsprozesses durchgeführt werden. Insbesondere kann das Verfahren als Inline-Verfahren durchgeführt werden. Der Abtastbereich kann in Echtzeit bestimmt oder angepasst werden. Dadurch können die Position, die Größe und die Form des Abtastbereichs zu jedem Zeitpunkt während des Laserbearbeitungsprozesses und basierend auf den aktuellen Parametern bestimmt werden.

Der Abtastbereich kann im Nachlauf des Laserbearbeitungsstrahls angeordnet sein. Der Abtastbereich wird vorzugsweise relativ zur (aktuellen) Position des Laserbearbeitungsstrahls festgelegt und kann somit Laserbearbeitungsstrahl stationär sein. Mit anderen Worten kann der Abtastbereich der Bewegung des Laserbearbeitungsstrahls folgen. Der Laserbearbeitungskopf, durch den der Laserbearbeitungsstrahl auf das Werkstück eingestrahlt wird, und das Werkstück sind vorzugsweise zumindest während des Laserbearbeitungsprozesses, d.h. während des Ausbildens einer Schweißnaht, stationär zueinander angeordnet. Somit wird der Laserbearbeitungsstrahl während des Laserbearbeitungsprozesses vorzugsweise allein durch die erste Ablenkvorrichtung entlang des Bearbeitungspfads abgelenkt. Der Bearbeitungspfad kann einem Verlauf einer gewünschten Schweißnaht entsprechen. Die vorliegende Offenbarung ist aber auch auf Laserbearbeitungssysteme anwendbar, bei denen das Werkstück während der Bearbeitung durch beispielsweise ein Achssystem bewegt wird. Eine weitere Möglichkeit besteht darin, dass der Laserbearbeitungskopf an einem Roboter befestigt ist. In diesem Fall die erste Ablenkvorrichtung den Laserbearbeitungsstrahl auslenken, wobei sich gleichzeitig oder synchron der Roboter bewegt. Dadurch kann Taktzeit eingespart werden. In diesem Fall gibt es eine übergeordnete Steuerung, die die Bewegungen des Roboters und der ersten und/oder zweiten Ablenkeinheit koordiniert. Vorzugsweise erfolgt die Bewegung des Laserbearbeitungsstrahls ohne Überlagerung einer oszillierenden Bewegung bzw. einer sogenannten Wobbel-Bewegung. Wenn allerdings die Bewegung des Laserbearbeitungsstrahls entlang des Bearbeitungspfads mit einer oszillierenden Bewegung, vorzugsweise mit kleiner Amplitude, d.h. mit einer sogenannten Wobbel-Bewegung, überlagert wird, kann die Position des Abtastbereichs der Bewegung des Laserbearbeitungsstrahls entlang des Bearbeitungspfads folgen, vorzugsweise ohne Berücksichtigung der Wobbel-Bewegung.

Der Laserbearbeitungsprozess kann ein Laserschweißprozess oder Laserstrahlschweißprozess, insbesondere ein Laserstrahlscannerschweißprozess, sein. Das Laserbearbeitungssystem kann eingerichtet sein, um den Laserbearbeitungsprozess durch Einstrahlen des Bearbeitungslaserstrahls auf das Werkstück durchzuführen.

Die erste Ablenkvorrichtung und die zweite Ablenkvorrichtung können auch als Scanvorrichtung oder Scanner bezeichnet werden. Das Laserbearbeitungssystem kann auch als Scannersystem bezeichnet werden.

Einer oder mehrere der genannten Aspekte kann eines oder mehrere der folgenden optionalen Merkmale aufweisen:
Gemäß Ausführungsformen können eine Position und/oder eine Form des Abtastbereichs basierend auf der Position des Bearbeitungslaserstrahls, insbesondere auf der Position des Bearbeitungslaserstrahls innerhalb des ersten Scanfelds, bestimmt werden. Alternativ oder zusätzlich kann die Position, die Größe und/oder die Form des Abtastbereichs basierend auf einer Bearbeitungsgeschwindigkeit entlang des Bearbeitungspfads und/oder auf einer Bearbeitungsrichtung und/oder auf einem Bearbeitungsgeschwindigkeitsvektor, d.h. auf einem Geschwindigkeitsvektor des Bearbeitungslaserstrahls, bestimmt werden.

Gemäß Ausführungsformen kann eine theoretische Position der Dampfkapillare bestimmt werden und die Position des Abtastbereichs kann basierend auf der bestimmten theoretischen Position der Dampfkapillare bestimmt werden, sodass die bestimmte theoretische Position im Abtastbereich enthalten ist. Insbesondere kann die Position des Abtastbereichs basierend auf der bestimmten theoretischen Position der Dampfkapillare so bestimmt werden, dass die bestimmte theoretische Position der Dampfkapillare dem Mittelpunkt bzw. Flächenschwerpunkt des Abtastbereichs entspricht. Die theoretische Position der Dampfkapillare kann basierend auf aktuellen Prozessparametern bestimmt werden. Eine Vielzahl von theoretischen Positionen der Dampfkapillare kann beispielsweise für verschiedene Prozessparameter in einer Tabelle hinterlegt sein.

Der Abtastpfad kann so bestimmt werden, dass ein Beginn bzw. ein Startpunkt des Abtastpfads der theoretischen Position der Dampfkapillare entspricht.

Das Verfahren kann während des Laserbearbeitungsprozesses kontinuierlich und/oder wiederholt und/oder iterativ durchgeführt werden. Beispielsweise kann der Mittelpunkt bzw. Flächenschwerpunkt des Abtastbereichs so bestimmt werden, dass er einer zuvor aus den Abstands-Messwerten bestimmten Position der Dampfkapillare entspricht.

Eine Größe des bestimmten oder angepassten Abtastbereichs kann kleiner sein als eine Größe des zweiten Scanfelds. Die Größe des Abtastbereichs kann derart bestimmt werden, dass sie gleich oder größer als das fünffache der (theoretischen) Größe der Dampfkapillare ist. Die Größe der Dampfkapillare kann im Wesentlichen der Fläche der Dampfkapillare auf der Werkstückoberfläche entsprechen.

Eine Größe des Abtastbereichs kann umso größer bestimmt werden, je näher die Position des Bearbeitungslaserstrahls an einem Rand des ersten Scanfelds liegt und/oder je größer eine Bearbeitungsgeschwindigkeit ist. Eine Größe des Abtastbereichs kann umso größer bestimmt werden, je stärker der Laserbearbeitungsstrahl durch die erste Ablenkvorrichtung, z.B. aus einer Nullstellung, abgelenkt wird. Die Nullstellung kann eine unausgelenkte Ausrichtung des Laserbearbeitungsstrahls bezeichnen, d.h. der Laserbearbeitungsstrahl wird nicht durch die erste Ablenkvorrichtung abgelenkt. Vorzugsweise verläuft der Laserbearbeitungsstrahl in der Nullstellung koaxial zu einer optischen Achse des Laserbearbeitungskopfs bzw. zu einer optischen Achse einer Fokussieroptik.

Ein Abstand zwischen der Position des Abtastbereichs auf der Werkstückoberfläche und der Position des Bearbeitungslaserstrahls auf der Werkstückoberfläche kann umso größer bestimmt werden, je größer eine Bearbeitungsgeschwindigkeit ist.

Die Position, die Form und/oder die Größe des Abtastbereichs kann derart bestimmt werden, dass die Position des Bearbeitungslaserstrahls außerhalb des Abtastbereichs liegt. Der Abtastbereich kann entlang des Bearbeitungspfads und/oder in Bearbeitungsrichtung im Nachlauf zur Position des Bearbeitungslaserstrahls angeordnet sein.

Die Form des Abtastbereichs kann basierend auf einer Bearbeitungsrichtung angepasst und/oder ausgerichtet werden. Beispielsweise kann basierend auf der Bearbeitungsrichtung als Form des Abtastbereichs eine Kreisform oder eine Tropfenform bestimmt werden. Bei nicht-punktsymmetrischen Formen, z.B. Tropfenform, Trapezform, Dreiecksform, kann die Form in Abhängigkeit von der Bearbeitungsrichtung bzw. vom Geschwindigkeitsvektor des Bearbeitungsstrahls ausgerichtet werden.

Der Abtastpfad oder ein Teil davon kann die Form einer 8, einer liegenden 8, einer Hantel, einer Erdnuss, einer Spirale, eines Kreises und/oder eines Kreisbogens aufweisen. Der Abtastpfad oder ein Teil davon kann eine Zickzack-, Sägezahn-, Rechtecks- und/oder Mäanderform aufweisen.

Der Abtastbereich kann basierend auf Tabellenwerten und/oder unter Verwendung eines künstlichen neuronalen Netzes bestimmt werden. Der Abtastbereich kann alternativ oder zusätzlich basierend auf einem funktionalen Zusammenhang von den genannten Parametern angepasst werden. Die Tabellenwerte können auf Basis von Experimenten und/oder Simulationen erhalten werden. Der Abtastbereich kann alternativ oder zusätzlich auf Basis von theoretischen und/oder experimentellen und/oder analytischen Werten oder einer Kombination daraus bestimmt werden oder hinterlegt sein. Gemäß Ausführungsformen können nicht vorhandene Tabellenwerte interpoliert oder extrapoliert werden. Das künstliche neuronale Netz kann basierend auf experimentellen Daten trainiert werden.

Der Abtastbereich, insbesondere die Position, die Form und/oder die Größe des Abtastbereichs, und/oder die theoretische Position der Dampfkapillare kann ferner basierend auf zumindest einem weiteren Parameter des Laserbearbeitungssystems bestimmt werden, beispielsweise basierend auf einer Ausrichtung von Spiegeln der ersten und/oder der zweiten Ablenkvorrichtung zueinander, und/oder basierend auf Parametern eines Portals oder eines Roboters, insbesondere eines Roboterarms, mit Hilfe dessen eine relative Position zwischen dem Laserbearbeitungskopf und dem Werkstück verändert werden.

Das Einkoppeln des optischen Messstrahls kann in Strahlausbreitungsrichtung des Bearbeitungslaserstrahls vor der ersten Ablenkvorrichtung erfolgen. Die Einkopplungsvorrichtung, beispielsweise ein Strahlteiler oder ein dichroitischer Spiegel, kann in Strahlausbreitungsrichtung vor der ersten Ablenkvorrichtung angeordnet sein.

Die erste Ablenkvorrichtung kann eingerichtet sein, um den Bearbeitungslaserstrahl um zumindest einen ersten Ablenkwinkel entlang einer ersten Achse abzulenken. Vorzugsweise ist die erste Ablenkvorrichtung zusätzlich eingerichtet, um den Bearbeitungslaserstrahl um einen zweiten Ablenkwinkel entlang einer zweiten Achse abzulenken, wobei die erste und die zweite Achse zueinander in einem Winkel angeordnet sind, beispielsweise senkrecht zueinander stehen. Der maximale erste Ablenkwinkel und/oder der maximale zweite Ablenkwinkel der ersten Ablenkvorrichtung können jeweils gleich oder größer als 10 Grad sein, insbesondere 10 bis 20 Grad. Diese Ablenkwinkel entsprechen Spiegelwinkel von mindestens +/-5 Grad, insbesondere von +/-10 Grad, da der Strahl um das Doppelte des Spiegelwinkels abgelenkt wird.

Die zweite Ablenkvorrichtung kann eingerichtet sein, um den Messstrahl um zumindest einen ersten Ablenkwinkel entlang einer ersten Achse abzulenken. Vorzugsweise ist die zweite Ablenkvorrichtung zusätzlich eingerichtet, um den Messstrahl um einen zweiten Ablenkwinkel entlang einer zweiten Achse abzulenken, wobei die erste und die zweite Achse zueinander in einem Winkel angeordnet sind, beispielsweise senkrecht zueinander stehen. Ein maximaler erster Ablenkwinkel und/oder ein maximaler zweiter Ablenkwinkel der zweiten Ablenkvorrichtung können jeweils kleiner als 10 Grad sein, und können vorzugweise kleiner 3 Grad, insbesondere ca. 2 Grad, sein.

Das erste Scanfeld der ersten Ablenkvorrichtung kann als Bereich auf dem Werkstück, insbesondere der Werkstückoberfläche definiert sein, und/oder durch einen maximalen ersten und einen maximalen zweiten Ablenkwinkel der ersten Ablenkvorrichtung vorgegeben sein. Das zweite Scanfeld der zweiten Ablenkvorrichtung kann als Bereich auf dem Werkstück, insbesondere der Werkstückoberfläche definiert sein, und/oder durch einen maximalen ersten und einen maximalen zweiten Ablenkwinkel der zweiten Ablenkvorrichtung vorgegeben sein. Eine Länge und/oder eine Breite des ersten Scanfelds kann gleich oder größer als 50 mm sein. Das erste Scanfeld kann beispielsweise eine Größe von mehr als 50 x 50 mm, insbesondere gleich wie oder größer als ca. 100 x 200 mm oder 250 x150 mm, auf dem Werkstück aufweisen. Eine Länge und/oder eine Breite des zweiten Scanfelds auf dem Werkstück kann kleiner als 30 mm, vorzugsweise kleiner 15 mm, beispielsweise ca. 10 mm sein. Gemäß Ausführungsformen weist das erste und/oder das zweite Scanfeld eine Ellipsenform auf. In diesem Fall kann die Länge des Scanfelds die Länge der Hauptachse der Ellipse und die Breite des Scanfelds die Länge der Nebenachse der Ellipse angeben.

Die zweite Ablenkvorrichtung kann ein zweites Scanfeld aufweisen, das kleiner ist als das erste Scanfeld. Die erste Ablenkvorrichtung kann als Großfeldscanner ausgebildet sein und/oder die zweite Ablenkvorrichtung kann als Kleinfeldscanner ausgebildet sein.

Um die Ablenkung des Bearbeitungslaserstrahls zu bewirken, kann die erste Ablenkvorrichtung einen ersten beweglichen Spiegel und einen zweiten beweglichen Spiegel aufweisen. Der erste bewegliche Spiegel kann um eine erste Rotationsachse drehbar sein und der zweite bewegliche Spiegel kann um eine zweite Rotationsachse drehbar sein, wobei die erste Rotationsachse und die zweite Rotationsachse in einem Winkel, z.B. in einem Winkel zwischen 45° und 135°, insbesondere von ca. 75° oder von 90°, zueinanderstehen. Dazu kann der Spiegel bzw. können der erste und zweite Spiegel als Galvanometer-Spiegel, kurz Galvo-Spiegel, ausgebildet sein. Alternativ kann die erste Ablenkvorrichtung einen beweglichen Spiegel aufweisen, der um zumindest zwei Achsen drehbar oder schwenkbar ist. Dementsprechend kann die erste Ablenkvorrichtung als Galvanometer- oder Galvo-Scanner ausgebildet sein. Alternativ kann die erste Ablenkvorrichtung als Prismenscanner oder Linsenscanner ausgebildet sein.

Um die Ablenkung des optischen Messstrahls zu bewirken, kann die zweite Ablenkvorrichtung einen ersten beweglichen Spiegel und einen zweiten beweglichen Spiegel aufweisen. Der erste bewegliche Spiegel kann um eine erste Rotationsachse drehbar sein und der zweite bewegliche Spiegel kann um eine zweite Rotationsachse drehbar sein, wobei die erste Rotationsachse und die zweite Rotationsachse in einem Winkel, z.B. in einem Winkel zwischen 45° und 135°, insbesondere von ca. 75° oder von 90°, zueinanderstehen. Alternativ kann die zweite Ablenkvorrichtung einen beweglichen Spiegel aufweisen, der um zumindest zwei Achsen drehbar oder schwenkbar ist. Zur Bewegung des Spiegels bzw. der ersten und zweiten Spiegel kann die zweite Ablenkvorrichtung entsprechende zumindest einen Galvanometer-Antrieb umfassen. Dementsprechend kann der Spiegel bzw. können die ersten und zweiten Spiegel als Galvanometer-Spiegel, kurz Galvo-Spiegel, ausgebildet sein. Dementsprechend kann die zweite Ablenkvorrichtung als Galvanometer- oder Galvo-Scanner ausgebildet sein. Alternativ kann die zweite Ablenkvorrichtung als Prismenscanner oder Linsenscanner ausgebildet sein.

Die erste Ablenkvorrichtung und/oder die zweite Ablenkvorrichtung kann alternativ MEMS-basierte, piezoelektrische und/oder induktive Antriebe aufweisen.

Ferner kann die Fokuslage des optischen Messstrahls, vorzugsweise unabhängig von der Fokuslage des Laserbearbeitungsstrahls, eingestellt werden. Die Fokuslage des optischen Messstrahls kann in Abhängigkeit von der Position des Laserbearbeitungsstrahls und/oder des optischen Messstrahls im ersten Scanfeld angepasst werden. Insbesondere kann der optische Messstrahl auf das Werkstück, insbesondere auf eine Oberfläche des Werkstücks, fokussiert werden. Die Fokussierung des optischen Messstrahls auf das Werkstück bzw. auf die Werkstückoberfläche hat den Vorteil, dass dadurch eine höhere Signalintensität des aus der Dampfkapillare reflektierten Anteils des optischen Messstrahls und damit ein besseres Signal-Rausch-Verhältnis erhalten werden kann.

Zum Einstellen der Fokuslage des optischen Messstrahls kann das Laserbearbeitungssystem eine Kollimationsvorrichtung zum Kollimieren des optischen Messstrahls aufweisen. Die Kollimationsvorrichtung kann eine Kollimatoroptik umfassen. Die Kollimatoroptik kann entlang einer optischen Achse der Kollimationsvorrichtung und/oder entlang einer Strahlausbreitungsrichtung des optischen Messstrahls verstellt werden. Die Verstellung kann beispielsweise motorisch erfolgen. Die Messvorrichtung kann eingerichtet sein, die Kollimationsvorrichtung so zu steuern, dass die Fokuslage des optischen Messstrahls basierend auf der Position des optischen Messstrahls innerhalb des ersten Scanfelds und/oder basierend auf der Position des optischen Messstrahls innerhalb des zweiten Scanfelds eingestellt wird. Dadurch kann die Fokussierung des optischen Messstrahls in Abhängigkeit von der Lage des Bearbeitungslaserstrahls und/oder des optischen Messstrahls im ersten Scanfeld und/oder in Abhängigkeit des optischen Messstrahls im zweiten Scanfeld angepasst werden.

Die Kollimationsvorrichtung für den optischen Messstrahl kann in Strahlausbreitungsrichtung des optischen Messstrahls vor der Einkopplungsvorrichtung angeordnet sein.

Das Laserbearbeitungssystem kann ferner eine Kollimationsvorrichtung zum Kollimieren des Bearbeitungslaserstrahls aufweisen. Die Kollimationsvorrichtung für den Bearbeitungslaserstrahl kann in Strahlausbreitungsrichtung des Bearbeitungslaserstrahls vor der Einkopplungsvorrichtung eingerichtet sein. Die Kollimationsvorrichtung für den Bearbeitungslaserstrahl bzw. ein Teil derselben kann entlang einer optischen Achse der Kollimationsvorrichtung und/oder entlang einer Strahlausbreitungsrichtung des Bearbeitungslaserstrahls verstellt werden, um eine Fokuslage des Bearbeitungslaserstrahls einzustellen. Die Kollimationsvorrichtung kann zwei oder mehr Linsen umfassen, deren Abstände zumindest teilweise zueinander veränderlich sind. Die Verstellung kann beispielsweise motorisch erfolgen. Eine Steuereinheit des Laserbearbeitungssystems kann eingerichtet sein, die Kollimationsvorrichtung so zu steuern, dass die Fokuslage des Bearbeitungslaserstrahls basierend auf der Position des Bearbeitungslaserstrahls innerhalb des ersten Scanfelds eingestellt wird.

Das Laserbearbeitungssystem kann ferner eine Fokussiervorrichtung zur Fokussierung des Bearbeitungslaserstrahls und/oder des optischen Messstrahls umfassen. Die Fokussiervorrichtung kann zwei oder mehr Linsen umfassen, deren Abstände zumindest teilweise zueinander veränderlich sind, um die Fokuslage einzustellen bzw. zu ändern. Die Fokussiervorrichtung kann insbesondere eingerichtet sein, um den Bearbeitungslaserstrahl auf das Werkstück, insbesondere auf eine Oberfläche des Werkstücks, zu fokussieren. Die Fokussiervorrichtung kann in Strahlausbreitungsrichtung des Bearbeitungslaserstrahls nach der ersten Ablenkvorrichtung angeordnet sein.

Vorzugsweise erfolgt eine Fokussierung des optischen Messstrahls und/oder des Laserbearbeitungsstrahls durch ein F-Theta Objektiv. Das F-Theta Objektiv ist vorzugsweise sowohl für die Wellenlänge des optischen Messstrahls als auch für die des Laserbearbeitungsstrahls ausgelegt. Das F-Theta Objektiv kann telezentrisch angeordnet sein.

Die Messvorrichtung kann als ein optischer Kohärenztomograph ausgebildet sein oder diesen umfassen. Die als optischer Kohärenztomograph ausgebildete Messvorrichtung kann einen dynamischen Referenzarm zur Erweiterung des Messbereichs aufweisen.

Ferner kann ein Offset zur Ablenkung des optischen Messstrahls durch die zweite Ablenkvorrichtung zum Kompensieren einer chromatischen Aberration des optischen Messstrahls relativ zum Bearbeitungslaserstrahl bestimmt werden. Der optische Messstrahl kann entlang des Abtastpfads unter Berücksichtigung des bestimmten Offsets abgelenkt werden. Der Offset kann auch als Versatz bezeichnet werden. Gemäß Ausführungsformen kann der Offset basierend auf Tabellenwerten bestimmt werden. Die Tabellenwerte können in einer Steuereinheit des Laserbearbeitungssystems hinterlegt sein. Hierbei können nicht vorhandene Tabellenwerte interpoliert oder extrapoliert werden.

Das Laserbearbeitungssystem kann ferner eine Steuereinheit umfassen, die eingerichtet ist, um das Laserbearbeitungssystem und/oder Elemente davon zu steuern, um den Laserbearbeitungsprozess bzw. das Verfahren Überwachen des Laserbearbeitungsprozess bzw. zum Bestimmen einer Tiefe und/oder Position der Dampfkapillare durchzuführen. Die Steuereinheit kann insbesondere eingerichtet sein, um den Laserbearbeitungskopf, die erste Ablenkvorrichtung, die zweite Ablenkvorrichtung, die Kollimationsvorrichtung für den optischen Messstrahl, und/oder die Kollimationsvorrichtung für den Bearbeitungslaserstrahl zu steuern. Die Funktionalität der Messvorrichtung kann in der Steuereinheit integriert sein oder die Messvorrichtung kann in der Steuereinheit integriert sein.

Das Laserbearbeitungssystem kann ferner eine Laserquelle zum Erzeugen des Bearbeitungslaserstrahls umfassen oder eingerichtet sein, den Bearbeitungslaserstrahl von einer Laserquelle zum Erzeugen des Bearbeitungslaserstrahls in den Bearbeitungskopf, z.B. durch einen Faserkoppler, einzukoppeln. Die Laserquelle kann auch kurz als Laser bezeichnet werden. Der Laser kann als Single-Mode-Laser, als Multi-Mode-Laser, als Festkörperlaser und/oder als Faserlaser ausgebildet sein. Das Laserbearbeitungssystem kann eine Lichtleitfaser zum Führen des Laserstrahls von der Laserquelle zum Laserbearbeitungskopf umfassen. Das Laserbearbeitungssystem kann weitere Sensoren, beispielsweise Photodioden, Pyrometer und/oder eine Kamera umfassen. Die weiteren Sensoren können dazu verwendet werden, aus den Abstands-Messwerten diejenigen herauszufinden, die die Tiefe der Dampfkapillare repräsentieren. Das Laserbearbeitungssystem kann ferner eine Schnittstelle zur Übermittlung von Daten an ein externes System umfassen.

Das zumindest eine Werkstück kann eine Batteriezelle umfassen. Das Einstrahlen des Bearbeitungslaserstrahls kann zum Kontaktieren der Batteriezelle erfolgen. Alternativ oder zusätzlich kann das zumindest eine Werkstück ein Leistungselektronik-Bauteil umfassen. Das Einstrahlen des Bearbeitungslaserstrahls kann zum Schweißen des Leistungselektronik-Bauteils erfolgen. Alternativ oder zusätzlich kann das zumindest eine Werkstück ein Mobiltelefon-Bauteil umfassen. Das Einstrahlen des Bearbeitungslaserstrahls kann zum Schweißen des Bauteils für das Mobiltelefon erfolgen.

### Kurzbeschreibung der Zeichnungen

Die Erfindung wird im Folgenden anhand von Figuren im Detail beschrieben.
Fig. 1A ist ein Blockdiagramm eines Laserbearbeitungssystems gemäß Ausführungsformen der vorliegenden Offenbarung;
Fig. 1B ist eine schematische Ansicht eines Laserbearbeitungssystems gemäß Ausführungsformen der vorliegenden Offenbarung;
Fig. 2 zeigt eine schematische Ansicht zur Veranschaulichung eines erstes Scanfelds einer ersten Ablenkvorrichtung für ein Laserbearbeitungssystem gemäß Ausführungsformen der vorliegenden Erfindung;
Fig. 3 zeigt ein Flussdiagramm eines Verfahrens zum Bestimmen der Tiefe einer Dampfkapillare während eines Laserbearbeitungsprozesses gemäß Ausführungsformen der vorliegenden Offenbarung;
Fig. 4A-4D zeigen schematische Ansichten einer Werkstückoberfläche zum Illustrieren des Bestimmens des Abtastbereichs gemäß Ausführungsformen;
Fig. 5 zeigt eine schematische Ansicht zur Veranschaulichung eines Abtastpfads innerhalb eines Abtastbereichs gemäß Ausführungsformen.

### Detaillierte Beschreibung der Zeichnungen

Im Folgenden werden, sofern nicht anders vermerkt, für gleiche und gleichwirkende Elemente dieselben Bezugszeichen verwendet.

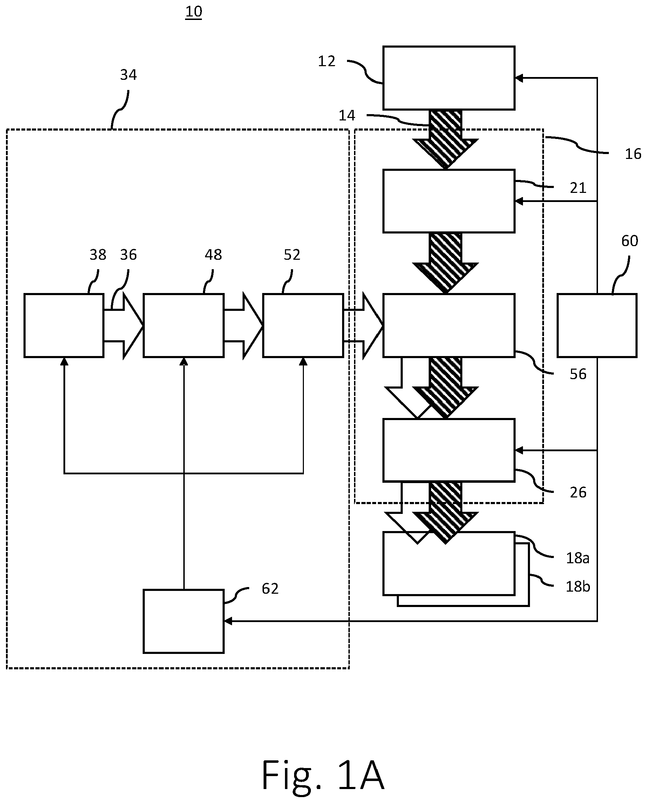

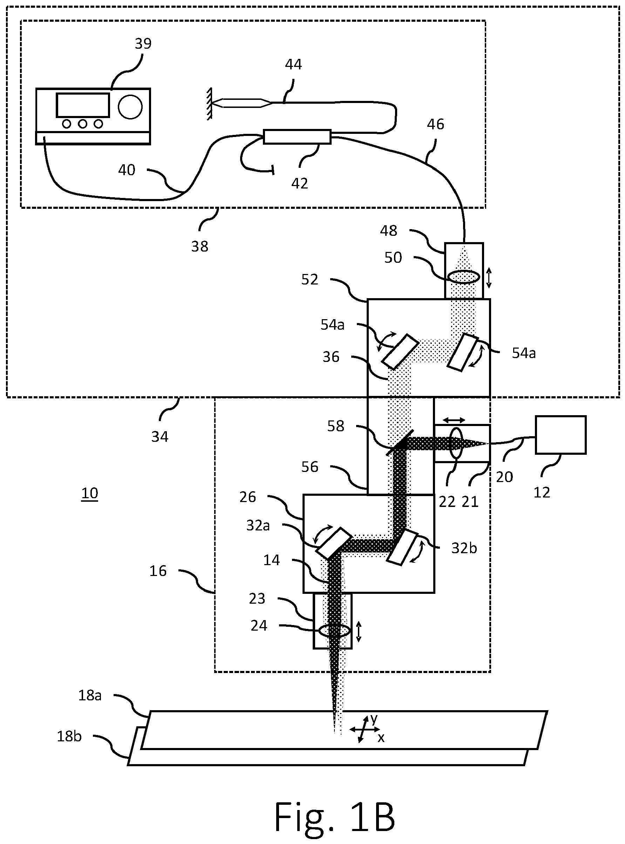

Fig. 1A ist ein Blockdiagramm und Fig. 1B ist eine schematische Ansicht eines Laserbearbeitungssystems gemäß Ausführungsformen der vorliegenden Offenbarung.

Das Laserbearbeitungssystem 10 kann an eine Laserquelle 12 zum Erzeugen eines Bearbeitungslaserstrahls 14, auch kurz als Bearbeitungsstrahl oder Laserstrahl bezeichnet, gekoppelt werden, um den Bearbeitungslaserstrahl 14 in einen Laserbearbeitungskopf 16 des Laserbearbeitungssystems 10 einzukoppeln. Das Laserbearbeitungssystem 10 umfasst den Laserbearbeitungskopf 16 zum Einstrahlen und Richten des Bearbeitungslaserstrahls 14 auf zumindest ein Werkstück 18a, 18b. Die Laserquelle 12 kann als Single-Mode-Laser, als Festkörperlaser oder als Faserlaser ausgebildet sein.

Das Laserbearbeitungssystem 10 kann eingerichtet sein, um einen Laserschweißprozess zum Schweißen des zumindest einen Werkstücks 18a, 18b durchzuführen. In diesem Fall kann das Laserbearbeitungssystem 10 als Laserschweißsystem und der Laserbearbeitungskopf 16 als Laserschweißkopf ausgebildet sein. Beispielsweise kann das Laserbearbeitungssystem 10 eingerichtet sein, um zwei Werkstücke 18a, 18b miteinander zu verschweißen. Wie in Fig. 1B gezeigt, sind die zwei Werkstücke 18a, 18b im Überlappstoß angeordnet, die vorliegende Offenbarung ist hierauf aber nicht beschränkt. Die Werkstücke können beispielsweise auch im Parallelstoß oder im Stumpfstoß angeordnet sein.

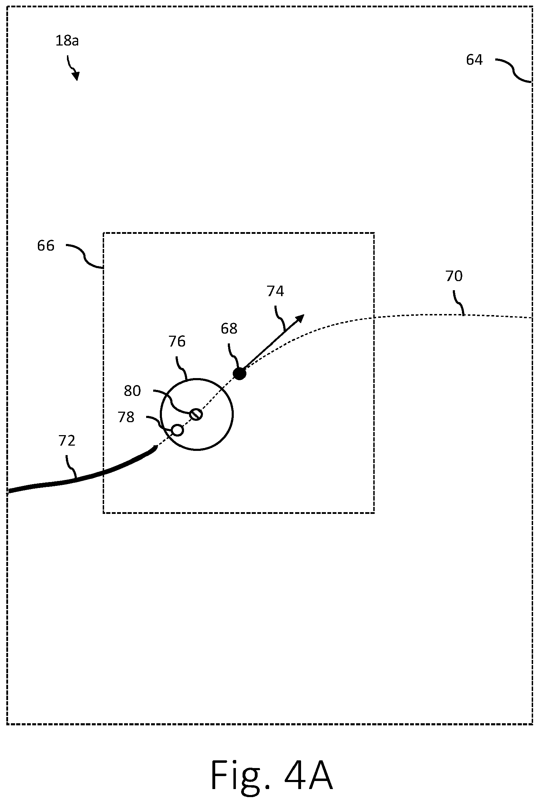

Das Schweißen des zumindest einen Werkstücks 18a, 18b erfolgt durch Einstrahlen des Bearbeitungslaserstrahls 14 auf das zumindest eine Werkstück 18a, 18b entlang eines Bearbeitungspfads zum Ausbilden einer Schweißnaht (siehe Fig. 4A-4D). Beim Einstrahlen des Bearbeitungslaserstrahls 14 auf das zumindest eine Werkstück 18a, 18b erhitzt sich das Material des Werkstücks 18a, 18b so stark, dass es verdampft. Dadurch entsteht eine Dampfkapillare (nicht gezeigt) in einem Bereich zwischen der Oberfläche des Werkstücks 18a, 18b bis zu einer gewissen Tiefe im Werkstück 18a, 18b. Die Tiefe der Dampfkapillare ist für die Beurteilung der Qualität des Laserschweißprozesses von herausragender Bedeutung, da sie unter anderem Rückschlüsse auf die Festigkeit der Schweißverbindung erlaubt. Das Laserbearbeitungssystem 10 ist eingerichtet, um die Tiefe und/oder die Position der Dampfkapillare zu bestimmen.

Der Bearbeitungslaserstrahl 14 wird über eine Lichtleitfaser 20 des Laserbearbeitungssystems 10 von der Laserquelle 12 zum Laserbearbeitungskopf 16 übertragen und von einem Ende der Lichtleitfaser 20, z.B. mittels eines Faserkopplers, in den Laserbearbeitungskopf 16 eingekoppelt. Eine im Anschluss an den Faserkoppler angeordnete Kollimationsvorrichtung 21 weist eine Kollimatoroptik 22 zum Kollimieren des aus dem Ende der Lichtleitfaser 20 divergent austretenden Bearbeitungslaserstrahls 14 auf. Mithilfe der Kollimationsvorrichtung 21 kann die Fokuslage des Bearbeitungslaserstrahls 14 eingestellt oder korrigiert werden. Die Achse, entlang der die Fokuslage des Bearbeitungslaserstrahls 14 verstellbar ist, kann einer optischen Achse des Laserbearbeitungskopfes 16, insbesondere einer optischen Achse einer Fokussieroptik 24 entsprechen. Die Achse kann auch als z-Achse bezeichnet werden. Demnach kann die Kollimatoroptik 22 als z-Kollimatoroptik oder kurz als z-Kollimation bezeichnet werden. Das Einstellen der Fokuslage kann durch Verstellen der Kollimatoroptik 22 entlang der optischen Achse der Kollimatoroptik 22 bzw. einer Strahlachse des Bearbeitungslaserstrahls 14 erfolgen. Die Kollimationsvorrichtung 21 kann eine Motoreinheit zur Verstellung der Kollimatoroptik 22 aufweisen.

Ferner umfasst der Laserbearbeitungskopf 16 eine Fokussiervorrichtung 23 mit der Fokussieroptik 24 zum Fokussieren des Bearbeitungslaserstrahls 14 auf das Werkstück 18a, 18b. Die Fokussieroptik 24 kann beispielsweise als F-Theta-Optik ausgebildet sein oder diese umfassen.

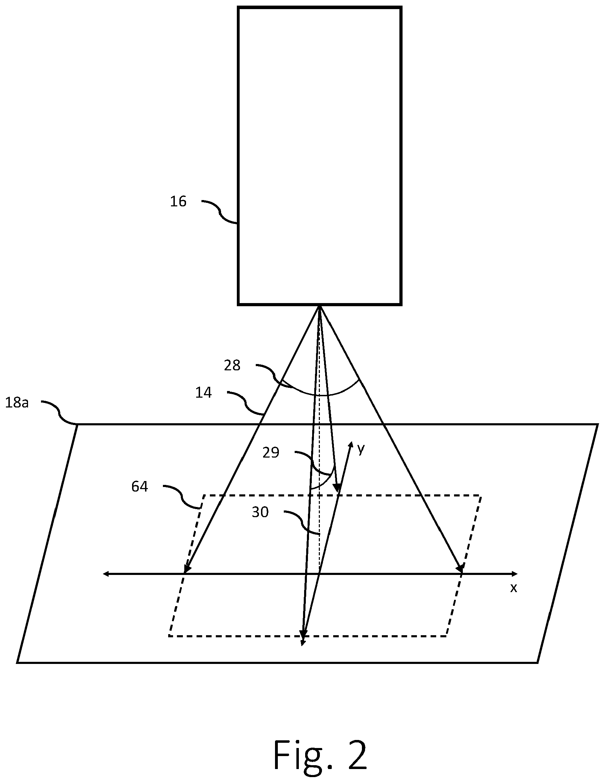

Um die Position des Bearbeitungslaserstrahls 14 auf dem Werkstück 18a, 18b zu verändern, und um insbesondere den Bearbeitungslaserstrahl 14 entlang des Bearbeitungspfades einzustrahlen, umfasst das Laserbearbeitungssystem 10 ferner eine erste Ablenkvorrichtung 26 zum Ablenken oder Auslenken des Bearbeitungslaserstrahls 14 relativ zum Werkstück 18a, 18b. Die erste Ablenkvorrichtung 26 ist eingerichtet, um den Bearbeitungslaserstrahl 14 bezüglich des Werkstücks 18a, 18b entlang zweier Achsen x, y zu bewegen (siehe Fig. 2) und abzulenken. Die zwei Achsen x, y können gemäß Ausführungsformen zueinander senkrecht sein und parallel zu einer Oberfläche des Werkstücks 18a, 18b, sind aber nicht hierauf beschränkt. Die erste Ablenkvorrichtung 26 kann auch als Scanner bezeichnet werden. Mithilfe der ersten Ablenkvorrichtung 26 kann der Bearbeitungspfad durch den Bearbeitungslaserstrahl 14 abgefahren werden.

Die erste Ablenkvorrichtung 26 ist eingerichtet, um den Bearbeitungslaserstrahl 14 entlang der x-Achse um einen ersten Ablenkwinkel abzulenken und um den Bearbeitungslaserstrahl 14 entlang der y-Achse um einen zweiten Ablenkwinkel abzulenken. Die Ablenkvorrichtung 26 umfasst bezüglich der x-Achse und bezüglich der y-Achse jeweils eine Nullstellung, für die der Bearbeitungslaserstrahl 14 entlang der jeweiligen Achse eine Nullposition einnimmt (siehe Fig. 2). Die Nullposition der x-Achse und die Nullposition der y-Achse können gemeinsam als Mittelpunkt oder Zentrum 30 eines ersten Scanfelds 64 der ersten Ablenkvorrichtung 26 betrachtet werden. Das Zentrum 30 des ersten Scanfelds 64 kann einer nicht abgelenkten Stellung des Bearbeitungslaserstrahls 14, d.h. einer (allgemeinen) Nullstellung des Bearbeitungslaserstrahls 14, entsprechen. In der nicht abgelenkten Stellung des Bearbeitungslaserstrahls 14 kann der Bearbeitungslaserstrahl 14 zwischen dem Laserbearbeitungskopf 16 und dem Werkstück 14 koaxial zu einer optischen Achse des Laserbearbeitungskopfes 16 und/oder einer optischen Achse der Fokussieroptik 24 verlaufen.

Ein maximaler erster Ablenkwinkel 28 entlang der x-Achse (d.h. Drehung um y-Achse) und ein maximaler zweiter Ablenkwinkel 29 entlang der y-Achse (d.h. Drehung um x-Achse) geben einen Rand des ersten Scanfeld 64 auf der Oberfläche des Werkstücks 18a, 18b vor, innerhalb dessen die erste Ablenkvorrichtung 26 den Bearbeitungslaserstrahl 14 bezüglich des Werkstücks 18a, 18b ablenken kann. Gemäß Ausführungsformen ist die erste Ablenkvorrichtung 26 als Großfeldscanner ausgebildet. Beispielsweise kann der maximale erste Ablenkwinkel 28 und/oder der maximale zweite Ablenkwinkel 29 größer als 10 Grad sein. Der erste und zweite maximale Ablenkwinkel kann konstruktionstechnisch vorgegeben sein. Alternativ kann das als Fokussiervorrichtung eingesetzte F-Theta Objektiv die maximalen Ablenkwinkel begrenzen.

In Fig. 2 ist das erste Scanfeld 64 mit einer rechteckigen Form gezeigt, die vorliegende Offenbarung ist hierauf aber nicht beschränkt. Das erste Scanfeld 64 kann auch eine kreisförmige oder eine elliptische Form aufweisen. In diesem Fall kann das in Fig. 2 gezeigte Rechteck als ein in das elliptische erste Scanfeld 64 eingeschriebene Rechteck mit dem größten Flächeninhalt betrachtet werden.

Die erste Ablenkvorrichtung 26 umfasst gemäß Ausführungsformen zwei bewegliche Spiegel 32a, 32b, die um unterschiedliche Rotationsachsen drehbar sind. Die Spiegel 32a, 32b können als Galvanometer-Spiegel ausgebildet sein. In diesem Fall kann die erste Ablenkvorrichtung 26 als Galvanometer-Scanner oder Galvo-Scanner bezeichnet werden.

Gemäß Ausführungsformen können zusätzlich der Laserbearbeitungskopf 16 und/oder das Werkstück 18a, 18b relativ zueinander bewegt werden, vorzugsweise zwischen zwei aufeinanderfolgenden Laserbearbeitungsprozessen. Beispielweise kann das Werkstück 18a, 18b durch eine erste Bewegungseinheit (nicht gezeigt) relativ zum Laserbearbeitungskopf 16 bewegt werden. Alternativ oder zusätzlich kann der Laserbearbeitungskopf 16 relativ zum Werkstück 18a, 18b durch eine zweite Bewegungseinheit (nicht gezeigt) bewegt werden. Die zweite Bewegungseinheit kann beispielsweise als Roboter ausgebildet sein und der Laserbearbeitungskopf 16 kann am Roboter befestigt sein. Während eines Laserbearbeitungsprozesses, d.h. während des Ausbildens einer Schweißnaht, bleibt der Laserbearbeitungskopf 16 bzw. das Laserbearbeitungssystem 10 vorzugsweise stationär zum Werkstück 18a, 18b (Relativgeschwindigkeit null).

Das Laserbearbeitungssystem 10 umfasst ferner eine Messvorrichtung 34 zur interferometrischen Abstandsmessung bzw. optischen Abstandsmessung mithilfe eines optischen Messstrahls 36. Die Messvorrichtung 34 ist beispielsweise eingerichtet, um einen Abstand zwischen dem Laserbearbeitungskopf 16 und dem Werkstück 18a, 18b zu messen.

Die Messvorrichtung 34 umfasst gemäß Ausführungsformen einen optischen Kohärenztomographen oder kann als optischer Kohärenztomograph ausgebildet sein. Mit anderen Worten kann die Abstandsmessung auf optischer Kohärenztomographie ("optical coherence tomography", OCT) basieren. Die Messvorrichtung 34 umfasst eine Auswerteeinheit 38 mit einer breitbandigen Lichtquelle, beispielsweise einer Superlumineszenzdiode, kurz SLD). Die Lichtquelle 39 koppelt Messlicht in eine Lichtleitfaser 40 ein. In einem Strahlteiler 42, der vorzugweise als Faserkoppler ausgebildet ist, wird das Messlicht in einen Referenzarm 44 und einen Messarm 46 aufgeteilt. Das Messlicht des Messarms 46 wird als der optische Messstrahl 36 über eine Lichtleitfaser zu einer Kollimationsvorrichtung 48 übertragen und vom Ende der Lichtleitfaser in die Kollimationsvorrichtung 48 eingekoppelt, um auf das Werkstück 18a, 18b eingestrahlt zu werden.

Die Kollimationsvorrichtung 48 weist eine Kollimatoroptik 50 zum Kollimieren des aus dem Ende der Lichtleitfaser divergent austretenden optischen Messstrahls 36 auf. Mithilfe der Kollimatoroptik 50 kann die Fokuslage des optischen Messstrahls 36 eingestellt werden. Die Achse, entlang der die Fokuslage des optischen Messstrahls 36 verstellbar ist, kann einer optischen Achse des Laserbearbeitungskopfes 16, insbesondere einer optischen Achse der Fokussieroptik 24 entsprechen. Die Achse kann auch als z-Achse bezeichnet werden. Demnach kann die Kollimatoroptik 50 als z-Kollimatoroptik 50 oder kurz als z-Kollimation bezeichnet werden. Das Einstellen der Fokuslage kann durch Verstellen der Kollimatoroptik 50 entlang der optischen Achse der Kollimatoroptik 50 bzw. einer Strahlausbreitungsrichtung des optischen Messstrahls 36 erfolgen. Die Verstellung kann motorisch erfolgen.

Gemäß Ausführungsformen kann der Referenzarm 44 als dynamischer Referenzarm ausgebildet sein. Damit kann der Messbereich der Messvorrichtung 34 erweitert werden.

Das hier beschriebene Prinzip zur Abstandsmessung beruht auf dem Prinzip der optischen Kohärenztomographie, die sich unter Zuhilfenahme eines Interferometers die Kohärenzeigenschaften von Licht zunutze macht. Zur Abstandsmessung wird der optische Messstrahl 36 auf eine Oberfläche des Werkstücks 18a, 18b eingestrahlt. Der von der Oberfläche zurückreflektierte Anteil des optischen Messstrahls 36 wird auf das Ende der Lichtleitfaser des Messarms 46 abgebildet, im Strahlteiler 42 mit dem zurückreflektierten Anteil des Messlichts aus dem Referenzarm 44 überlagert und zur Interferenz gebracht. Das überlagerte Licht enthält Informationen über den Weglängenunterschied zwischen dem Referenzarm 44 und dem Messarm 46. Diese Informationen werden durch die Auswerteeinheit 38 ausgewertet. Dadurch können Informationen über den Abstand zum Werkstück 18a, 18b bzw. zwischen dem Werkstück 18a, 18b und dem Laserbearbeitungskopf 16 erhalten werden.

Zur Bestimmung der Tiefe der Dampfkapillare muss der optische Messstrahl 36 in die Dampfkapillare gerichtet und vom Boden der Dampfkapillare zurück zur Messvorrichtung 34 bzw. Auswerteeinheit 38 reflektiert werden. Wenn zusätzlich ein Abstand zur Oberfläche des Werkstücks 18a, 18b bekannt ist, kann die Messvorrichtung 34 bzw. die Auswerteeinheit 38 eine Tiefe der Dampfkapillare, d.h. den Abstand von der tiefsten Stelle der Dampfkapillare zur Oberfläche des Werkstücks 18a, 18b bestimmen. Da die genaue Position der tiefsten Stelle der Dampfkapillare allerdings unbekannt ist, wird der Messstrahl 36 entlang des Abtastpfads innerhalb des Abtastbereichs bewegt, um die Werkstückoberfläche innerhalb des Abtastbereichs abzutasten bzw. zu scannen.

Um die Position des Messstrahls 36 auf dem Werkstück 18a, 18b zu verändern, um damit den Abstand zum Werkstück 18a, 18b an verschiedenen Positionen zu messen, umfasst die Messvorrichtung 34 eine zweite Ablenkvorrichtung 52 zum Ablenken oder Auslenken des optischen Messstrahls 36 relativ zum Werkstück 18a, 18b. Das Messen des Abstands zum Werkstück 18a, 18b an verschiedenen Positionen kann auch als Abtasten des Werkstücks bezeichnet werden. Die zweite Ablenkvorrichtung 52 ist eingerichtet, um den optischen Messstrahl 36 bezüglich des Werkstücks 18a, 18b entlang zweier Achsen zu bewegen und abzulenken. Die zwei Achsen können den x- und y-Achsen der ersten Ablenkvorrichtung 26 entsprechen, die vorliegende Offenbarung ist hierauf aber nicht beschränkt. Die zweite Ablenkvorrichtung 52 kann auch als Scanner bezeichnet werden. Mithilfe der zweiten Ablenkvorrichtung 52 kann die Oberfläche des Werkstücks 18a, 18b und die Dampfkapillare abgetastet werden.

Die zweite Ablenkvorrichtung 52 weist einen maximalen ersten Ablenkwinkel und einen maximalen zweiten Ablenkwinkel auf. Basierend auf dem maximalen ersten Ablenkwinkel und dem maximalen zweiten Ablenkwinkel der zweiten Ablenkvorrichtung 52 weist die zweite Ablenkvorrichtung 52 ein zweites Scanfeld 66 auf (siehe Fig. 4A-4D), innerhalb dessen die zweite Ablenkvorrichtung 52 den optischen Messstrahl 36 bezüglich des Werkstücks 18a, 18b maximal ablenken kann. Gemäß Ausführungsformen ist die zweite Ablenkvorrichtung 52 als Kleinfeldscanner ausgebildet. Beispielsweise kann der maximale erste Ablenkwinkel und/oder der maximale zweite Ablenkwinkel der zweiten Ablenkvorrichtung 52 kleiner als 10 Grad sein. Somit kann eine Fläche oder Größe des zweiten Scanfelds 66 kleiner sein als jene des ersten Scanfelds 64 sein. Das zweite Scanfeld 66 kann eine rechteckige, kreisförmige oder elliptische Form aufweisen. Der erste und zweite maximale Ablenkwinkel kann konstruktionstechnisch vorgegeben sein.

Die zweite Ablenkvorrichtung 52 umfasst gemäß Ausführungsformen zwei bewegliche Spiegel 54a, 54b, die um unterschiedliche Rotationsachsen drehbar sind. Die Spiegel 54a, 54b können als Galvanometer-Spiegel ausgebildet sein. In diesem Fall kann die zweite Ablenkvorrichtung 52 als Galvanometer-Scanner oder Galvo-Scanner bezeichnet werden.

Der Laserbearbeitungskopf 16 umfasst ferner eine Einkopplungsvorrichtung 56 zum Einkoppeln des optischen Messstrahls 36 in den Laserbearbeitungskopf 16. Die Einkopplungsvorrichtung 56 ist eingerichtet, um den optischen Messstrahl 36 mit dem Bearbeitungslaserstrahl 14 zu überlagern. Die Einkopplungsvorrichtung 56 umfasst beispielsweise einen Strahlteiler 58. Der Strahlteiler 58 kann gemäß Ausführungsformen als dichroitischer Spiegel ausgeführt sein oder diesen umfassen. Der Strahlteiler 58 kann Licht des optischen Messstrahls 36 passieren lassen und Licht des Bearbeitungslaserstrahls 14 reflektieren. Gemäß Ausführungsformen können der (unausgelenkte) optische Messstrahl 36 und der (unausgelenkte) Bearbeitungslaserstrahl 14 zumindest streckenweise parallel und/oder koaxial zueinander verlaufen.

Das Einkoppeln des optischen Messstrahls 36 in den Laserbearbeitungskopf 16 durch die Einkopplungsvorrichtung 56 erfolgt in Strahlausbreitungsrichtung des optischen Messstrahls 36 bzw. des Bearbeitungslaserstrahls 14 vor der ersten Ablenkvorrichtung 26. Insbesondere passieren der optische Messstrahl 36 und der Bearbeitungslaserstrahl 14 sowohl die erste Ablenkvorrichtung 26 als auch die Fokussiervorrichtung 23. Demnach wird der optische Messstrahl 36 durch die erste Ablenkvorrichtung 26 gemeinsam mit dem Bearbeitungslaserstrahl 14 abgelenkt. Unter Vernachlässigung der chromatischen Aberration kann ein Zentrum des zweiten Scanbereichs 66 der zweiten Ablenkvorrichtung 52 einer Position des Bearbeitungslaserstrahls 14 auf dem Werkstück 18a, 18b entsprechen. Der optische Messstrahl 36 wird anschließend durch die Fokussieroptik 24 der Fokussiervorrichtung 23 gemeinsam mit dem Bearbeitungslaserstrahl 14 fokussiert.

Da lediglich der Messstrahl 36 durch die zweite Ablenkvorrichtung 52 verläuft, wird der optische Messstrahl 36 durch die zweite Ablenkvorrichtung 52 relativ zum Bearbeitungslaserstrahl 14 und unabhängig von einer Ablenkung des Bearbeitungslaserstrahls 14 durch die erste Ablenkvorrichtung 26 abgelenkt.

Das Laserbearbeitungssystem 10 weist ferner eine zentrale Steuereinheit 60 auf. Die zentrale Steuereinheit 60 ist eingerichtet, das Laserbearbeitungssystem 10 oder Elemente zu steuern, um den Laserbearbeitungsprozess und das Verfahren zum Bestimmen der Tiefe und/oder der Position der Dampfkapillare gemäß Ausführungsformen der vorliegenden Offenbarung durchzuführen. Beispielsweise ist die zentrale Steuereinheit 60 eingerichtet, um die Laserquelle 12 zu steuern, um den Bearbeitungslaserstrahl 14 ein- und auszuschalten (Lasersteuerung on/off) oder um die Leistung des Bearbeitungslaserstrahls 14 einzustellen oder zu modulieren (Leistungsmodulation). Ferner kann die zentrale Steuereinheit 60 eingerichtet sein, um die Fokussiervorrichtung 23 zu steuern, um die Fokuslage des Bearbeitungslaserstrahls 14 einzustellen oder zu korrigieren. Weiter kann die zentrale Steuereinheit 60 eingerichtet sein, die erste Ablenkvorrichtung 26 zu steuern, um den Bearbeitungslaserstahl 14 auf dem Werkstück 18a, 18b abzulenken, und insbesondere mit dem Bearbeitungslaserstrahl 14 den Bearbeitungspfad abzufahren. Ferner ist die zentrale Steuereinheit 60 eingerichtet, an eine Steuereinheit 62 der Messvorrichtung 34 Informationen über die Position des Bearbeitungslaserstrahls 14 im ersten Scanfeld und die aktuelle Leistung des Bearbeitungslaserstrahls 14 zu übertragen.

Die Steuereinheit 62 ist eingerichtet, um die Auswerteeinheit 38, die Kollimationsvorrichtung 48 und die zweite Ablenkvorrichtung 52 zu steuern. Beispielsweise ist die Steuereinheit 62 eingerichtet, um ein Signal zur Steuerung des dynamischen Referenzarms 44 an die Auswerteeinheit 38 auszugeben. Ferner ist die Steuereinheit 62 eingerichtet, um die Kollimationsvorrichtung 48 zu steuern, um eine Fokuslage des optischen Messstrahls 36 einzustellen oder zu korrigieren, und um insbesondere eine Fokuslage des optischen Messstrahls 36 in z-Richtung einzustellen. Zudem kann die Steuereinheit 62 eingerichtet sein, um ein Steuersignal an die zweite Ablenkvorrichtung 52 zum Einstellen der Position des optischen Messstrahls 36 auszugeben.

Die Steuereinheit 62 kann ferner eingerichtet sein, um für den optischen Messstrahl 36 eine Korrektur der chromatischen Aberration, insbesondere als Funktion der Position des Bearbeitungslaserstrahls 14 zu bestimmen. Die Korrektur kann entlang der x-, y- und/oder z-Achse bestimmt werden. Die Steuereinheit 62 kann darüber hinaus eingerichtet sein, um für den optischen Messstrahl 36 eine Korrektur der wahrscheinlichen Abweichung der Position der Dampfkapillare zum Bearbeitungslaserstrahl 14 entlang x- und y-Achse zu bestimmen. Schließlich kann die Steuereinheit 62 eingerichtet sein, um einen Abtastbereich für den optischen Messstrahl 36 und eine Scanstrategie zu bestimmen, wie nachfolgend im Detail beschrieben ist. Der Abtastbereich kann insbesondere in einer Umgebung um die theoretische Position der Dampfkapillare bestimmt werden.

Eine oder mehrere der genannten Funktionalitäten der Steuereinheit 62 kann durch die zentrale Steuereinheit 60 implementiert sein und/oder die Steuereinheit 62 kann in die zentrale Steuereinheit 60 integriert sein.

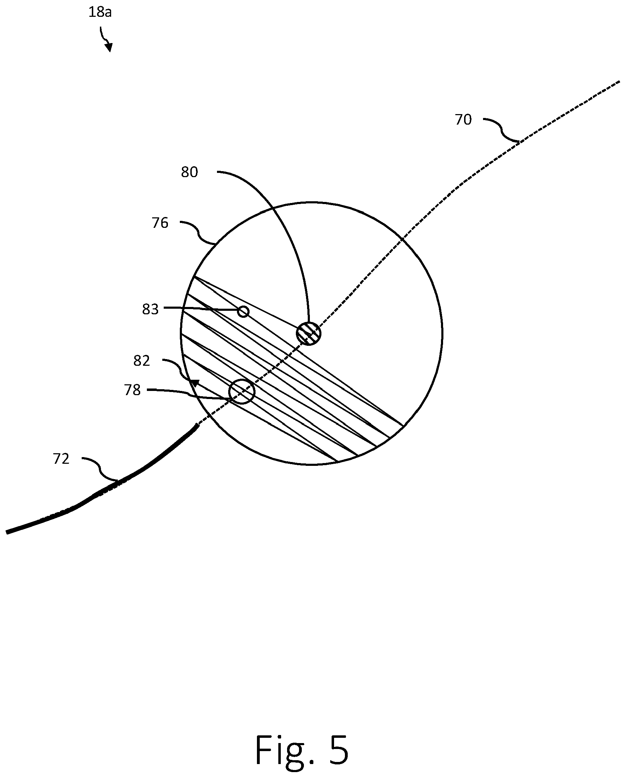

Da wie oben erwähnt die genaue Position (der tiefsten Stelle) der Dampfkapillare unbekannt ist, wird die Werkstückoberfläche mit dem Messstrahl 36 innerhalb des Abtastbereichs 76 abgetastet. Hierbei kann erfindungsgemäß die Häufigkeit einer Falschmessung bzw. einer Messung an einer Position, die nicht (der tiefsten Stelle) der Dampfkapillare entspricht, reduziert werden, indem der Abtastbereich 76 basierend auf zumindest einem Parameter angepasst wird bzw. mit einer möglichst kleinen Größe bestimmt wird. Die Messvorrichtung 34 bzw. die Steuereinheit 62 sind daher eingerichtet, um einen Abtastbereich 76 (siehe Fig. 4A-4D) für den optischen Messstrahl 36 zu bestimmen. Der Abtastbereich 76 für den optischen Messstrahl 36 gibt einen Bereich auf der Oberfläche des Werkstücks 18a, 18b an, innerhalb dessen der optische Messstrahl 36 auf verschiedene Positionen des Werkstücks 18a, 18b gerichtet und abgelenkt wird. An den verschiedenen Positionen kann basierend auf dem zuvor beschriebenen reflektierten Anteil des optischen Messstrahls 36 von der Oberfläche des Werkstücks 18a, 18b jeweils ein Abstand zum Werkstück 18a, 18b erfasst oder gemessen werden, um entsprechende Abstands-Messwerte zu erhalten. Das Einstrahlen des optischen Messstrahls 36 auf die verschiedenen Positionen innerhalb des Abtastbereichs 76 kann entlang eines Abtastpfads 82 (siehe Fig. 5) erfolgen. Der Abtastpfad 82 kann beispielsweise eine Spiral- oder Zickzackform aufweisen. Das Bestimmen des Abtastpfads 82 innerhalb des Abtastbereichs 76 kann auch als das Bestimmen der Scanstrategie bezeichnet werden.

Basierend auf den erfassten Abstands-Messwerten entlang des Abtastpfads 82 innerhalb des Abtastbereichs 76 kann anschließend die Position 78 der Dampfkapillare (siehe Fig. 4A-4D, 5) und die Tiefe der Dampfkapillare bestimmt werden. Der Abtastbereich kann auch als Suchbereich für die Position 78 der Dampfkapillare bezeichnet werden, da basierend auf den innerhalb des Abtastbereichs 76 erfassten Abstands-Messwerten die Position 78 der Dampfkapillare bestimmt wird. Beispielsweise wird die Position, an der der größte Abstands-Messwert ermittelt wird, als die Position 78 der Dampfkapillare bestimmt.

Das Anpassen des Abtastbereichs an die momentane Prozesssituation ist auch deshalb notwendig, weil die (tatsächliche) Position 78 der Dampfkapillare nicht notwendigerweise mit der Position des Bearbeitungslaserstrahls 14 auf dem Werkstück 18a, 18b übereinstimmt oder einen konstanten Versatz zu derselben aufweist. Sie ist von verschiedenen Parametern des Laserbearbeitungsprozesses abhängig. Demnach kann zwischen der Position 78 der Dampfkapillare und der Position 68 des Bearbeitungslaserstrahls 14 ein Abstand oder Versatz vorhanden sein, der variabel sein kann. Dies ist in Fig. 4A-4D veranschaulicht, wo die Position 78 der Dampfkapillare entlang des Bearbeitungspfads 70 im Nachlauf zur Position 68 des Bearbeitungslaserstrahls 14 auf dem Werkstück 18a, 18b angeordnet ist. Der Versatz hängt insbesondere von Parametern des Laserbearbeitungsprozesses ab, auch als Prozessparameter bezeichnet. Dazu zählen die Position 68 des Bearbeitungslaserstrahls 14 auf dem Werkstück 18a, 18b und/oder in Bezug auf das erste Scanfeld, der Winkel des Bearbeitungslaserstrahls 14 zum Werkstück 18a, 18b, der Ablenkwinkel bzw. die aktuelle Auslenkung des Bearbeitungslaserstrahls 14 durch die erste Ablenkvorrichtung, eine Bearbeitungsgeschwindigkeit entlang des Bearbeitungspfades 70, ein Bearbeitungsvektor bzw. ein Geschwindigkeitsvektor des Bearbeitungsstrahls, eine Leistung des Bearbeitungslaserstrahls 14, ein Material und eine Dicke des Werkstücks 18a, 18b.

Der Einfluss dieser Parameter auf den Versatz zwischen der Position des Bearbeitungslaserstrahls und der Position der Dampfkapillare, insbesondere der tiefsten Stelle der Dampfkapillare, kann von der Konfiguration des Laserbearbeitungssystems, beispielsweise der Brennweiten, den verwendeten Optiken, etc., abhängen und muss ggf. für das jeweilige System individuell bestimmt werden. Dies kann beispielsweise durch Simulation, Experimente und Messungen erfolgen. Zur Bestimmung einer (theoretischen) Position der Dampfkapillare während eines bestimmten bzw. vorgegebenen Laserbearbeitungsprozesses können Informationen über den Einfluss der Prozessparameter auf die Position der Dampfkapillare in der Steuereinheit des Laserbearbeitungssystems als Tabellenwerte oder als funktioneller Zusammenhang für nachfolgende, ähnliche oder identische Laserbearbeitungsprozesse hinterlegt werden. Alternativ oder zusätzlich kann die Bestimmung auch unter Verwendung eines künstlichen neuronalen Netzes erfolgen, welches mit den Informationen trainiert wurde.

Die tatsächliche Position der Dampfkapillare während des Laserbearbeitungsprozesses ist also nicht ohne weiteres bekannt. Gleichzeitig ist die Messfrequenz der Messvorrichtung begrenzt. D.h. es können pro Zeiteinheit nur eine begrenzte Anzahl von Abstands-Messwerten erhalten werden. Wird die Werkstückoberfläche innerhalb des gesamten zweiten Scanbereichs der zweiten Ablenkvorrichtung durch den optischen Messstrahl abgetastet, werden relativ wenige Abstands-Messwerte von der tiefsten Stelle der Dampfkapillare erfasst. Dadurch kann keine hinreichend genaue Aussage zur Tiefe der Dampfkapillare gemacht werden.

Die vorliegende Offenbarung beruht auf dem Grundgedanken, während des Laserbearbeitungsprozesses den Abtastbereich zum Abtasten des Werkstücks mittels des optischen Messstrahls basierend auf den aktuellen Prozessparametern während des Laserbearbeitungsprozesses anzupassen bzw. zu optimieren. Dies ermöglicht es, den Abtastbereich in Abhängigkeit von der sich während Laserbearbeitungsprozesses aktuellen und veränderlichen Position des Bearbeitungslaserstrahls zu bestimmen.

Statt also, wie im Stand der Technik, das Werkstück mit dem optischen Messstrahl in einem fest vorgegebenen Abtastbereich oder innerhalb des gesamten zweiten Scanfelds der zweiten Ablenkvorrichtung, um die Position des Bearbeitungslaserstrahls herum abzutasten, wird bei der vorliegenden Offenbarung der Abtastbereich, in dem das Werkstück abgetastet und die Dampfkapillare gesucht wird, deutlich eingeschränkt. Dadurch wird die Wahrscheinlichkeit erhöht, dass der optische Messstrahl beim Abtasten entlang des Abtastpfads innerhalb des Abtastbereichs in die Dampfkapillare trifft. Somit werden mehr Abstands-Messwerte aus der Dampfkapillare erhalten. Insbesondere ergeben sich dadurch mehr Abstands-Messwerte aus der Dampfkapillare pro Zeiteinheit oder pro Längeneinheit des Abtastpfads bzw. des Bearbeitungspfads. Somit kann die Tiefe der Dampfkapillare effizienter, schneller und präziser erfasst werden.

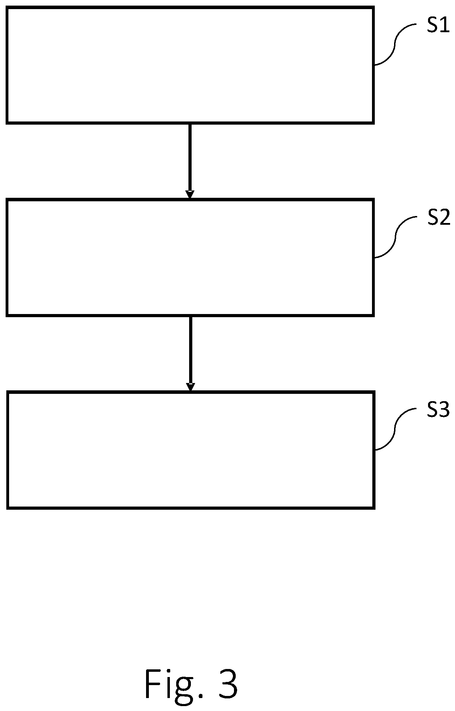

Fig. 3 zeigt ein Flussdiagramm eines Verfahrens zum Bestimmen einer Position und einer Tiefe einer Dampfkapillare während eines Laserbearbeitungsprozesses gemäß Ausführungsformen der vorliegenden Offenbarung. Das Verfahren kann durch das zuvor mit Bezug auf Fig. 1A und 1B beschriebene Laserbearbeitungssystem 10 durchgeführt werden.

Fig. 4A-4D zeigen schematische Ansichten einer Oberfläche eines Werkstücks zum Veranschaulichen des Bestimmens und Anpassens des Abtastbereichs gemäß Ausführungsformen.

Das Verfahren beginnt mit dem Durchführen des Laserbearbeitungsprozesses, beispielsweise eines Laserschweißprozesses, durch Einstrahlen des Bearbeitungslaserstrahls 14 auf die in Fig. 1A, 1B gezeigten Werkstücke 18a, 18b zum Ausbilden der Dampfkapillare (S1). Dabei wird der Bearbeitungslaserstrahl 14 durch die erste Ablenkvorrichtung 26 entlang eines Bearbeitungspfads 70 innerhalb des ersten Scanfelds 64 der ersten Ablenkvorrichtung 26 auf dem oben liegenden Werkstück 18a abgelenkt.

Während des Laserbearbeitungsprozesses wird zudem der optische Messstrahl 36 auf das Werkstück 18a eingestrahlt, um Abstands-Messwerte entlang des Abtastpfads 82 basierend auf dem von dem Werkstück 18a reflektierten Anteil des optischen Messstrahls 36 zu erfassen (S2). Dabei wird der optische Messstrahl 36 durch die zweite Ablenkvorrichtung 52 relativ zum Bearbeitungslaserstrahl 14 entlang des Abtastpfads innerhalb des Abtastbereichs auf dem Werkstück 18a abgelenkt. Durch die erste Ablenkvorrichtung 26 wird der optische Messstrahl 36 zudem zusammen mit dem Bearbeitungslaserstrahl 14 abgelenkt. Dabei wird der Abtastbereich 76, insbesondere eine Größe des Abtastbereichs 76, innerhalb des zweiten Scanfelds 66 basierend auf aktuellen Parametern des Laserbearbeitungsprozesses bestimmt und angepasst. Dies kann beispielsweise basierend auf Informationen über den Einfluss der Prozessparameter auf die Position der Dampfkapillare relativ zur Position des Bearbeitungslaserstrahls erfolgen. Diese Informationen können als Tabellenwerte in der zentralen Steuereinheit 60 bzw. in der Steuereinheit 62 hinterlegt sein. Die Bestimmung und Anpassung des Abtastbereichs kann gemäß Ausführungsformen unter Verwendung eines künstlichen neuronalen Netzes erfolgen.

Im letzten Schritt S3 werden die Tiefe und/oder die Position der Dampfkapillare basierend auf den erfassten Abstands-Messwerten bestimmt.

In Fig. 4A-4D ist der erste Scanbereich 64 der ersten Ablenkvorrichtung 26 auf dem Werkstück 18a gezeigt. Ferner ist der zweite Scanbereich 66 der zweiten Ablenkvorrichtung 52 zum Ablenken des optischen Messstrahls 36 relativ zum und unabhängig vom Bearbeitungslaserstrahl 14 gezeigt. Die Fläche oder Größe des zweiten Scanbereichs 66 ist kleiner als jene des ersten Scanbereichs 64.

Zudem ist in Fig. 4A-4D die Position 68 des Bearbeitungslaserstrahls 14 im ersten Scanfeld 64 gezeigt. Die Position 68 des Bearbeitungslaserstrahls 14 kann als Mittelpunkt, beispielsweise als Flächenschwerpunkt, eines Flecks auf der Werkstückoberfläche definiert sein, der beim Auftreffen des Bearbeitungslaserstrahls 14 auf dem Werkstück 18a entsteht. Gemäß Ausführungsformen ist der Fleck kreisförmig, die vorliegende Offenbarung ist hierauf aber nicht beschränkt.

Die Position 68 des Bearbeitungslaserstrahls 14 kann als Position des Bearbeitungslaserstrahls 14 auf der Oberfläche des Werkstücks 18a definiert sein. Entsprechend kann die Position 83 des optischen Messstrahls 36 definiert sein (siehe Fig. 5). Die Position des Abtastbereichs 76 kann als eine Position eines Mittelpunkts oder eines Flächenschwerpunkts des Abtastbereichs 76 auf der Werkstückoberfläche definiert sein.

Der zweite Scanbereich 66 der zweiten Ablenkvorrichtung 52 für den optischen Messstrahl 36 umfasst unter Vernachlässigung der chromatischen Aberration stets die Position 68 des Bearbeitungslaserstrahls 14 und die Position 68 des Bearbeitungslaserstrahls 14 kann einem Mittelpunkt des zweiten Scanbereichs 66 entsprechen. Dies liegt daran, dass der optische Messstrahl 36 nach der Ablenkung durch die zweite Ablenkvorrichtung 52 anschließend mit dem Bearbeitungslaserstrahl 14 überlagert wird und zusammen mit dem Bearbeitungslaserstrahl 14 durch die erste Ablenkvorrichtung 26 abgelenkt werden kann.

In Fig. 4A-4D sind ferner ein Bearbeitungspfad 70, entlang dessen der Bearbeitungslaserstrahl 14 während des Laserschweißprozesses geführt wird, und die dabei im Nachlauf ausgebildete Schweißnaht 72 veranschaulicht. Zudem ist der Bearbeitungsgeschwindigkeitsvektor 74 dargestellt. Der Bearbeitungsgeschwindigkeitsvektor 74 kann als ein zweidimensionaler Vektor parallel zur Werkstückoberfläche dargestellt werden. Der Bearbeitungsgeschwindigkeitsvektor 74 ist tangential zum Bearbeitungspfad 70. Die Bearbeitungsgeschwindigkeit ist der Betrag des Bearbeitungsgeschwindigkeitsvektors 74.

Die Bearbeitungsgeschwindigkeit kann demnach definiert sein als eine Geschwindigkeit, mit der der Bearbeitungslaserstrahl 14 entlang des Bearbeitungspfads 70 eingestrahlt und abgelenkt wird. Dabei kann eine etwaige überlagerte Wobbelbewegung des Bearbeitungslaserstrahls 14 unberücksichtigt bleiben. Als Wobbelbewegung wird in der Regel eine oszillierende Bewegung um die eigentliche Bearbeitungsposition bezeichnet, deren Amplitude in der Regel in etwa einer Breite der resultierenden Schweißnaht entspricht. Wenn der Bearbeitungslaserstrahl 14 eine Wobbelbewegung ausführt, kann die Bearbeitungsgeschwindigkeit als eine mittlere Geschwindigkeit des Bearbeitungslaserstrahls 14 entlang des Bearbeitungspfads 70 bezeichnen. Bevorzugt erfolgt jedoch keine Überlagerung der Auslenkung des Bearbeitungslaserstrahls 14 entlang des Bearbeitungspfads 70 mit einer oszillierenden Wobbelbewegung.

In Fig. 4A-4D sind ferner die tatsächliche Position 78 der Dampfkapillare und eine theoretische oder erwartete Position 80 der Dampfkapillare eingezeichnet. Gemäß Ausführungsformen kann zunächst die theoretische Position 80 basierend auf den zuvor genannten aktuellen Prozessparametern bestimmt werden. Alternativ oder zusätzlich kann der theoretische erwartete Versatz zwischen der Position der Dampfkapillare und der Position 68 des Bearbeitungslaserstrahls 14 bestimmt werden. Anschließend kann der Abtastbereich 76 basierend auf der theoretischen Position 80 bzw. dem theoretischen Versatz bestimmt werden. Beispielsweise kann der Abtastbereich 76 so bestimmt werden, dass ein Mittelpunkt des Abtastbereichs 76 der erwarteten Position 80 entspricht.

Wie in Fig. 4A gezeigt, wird der Abtastbereich 76 beispielsweise kreisförmig bestimmt. Ferner ist eine Fläche des Abtastbereichs 76 kleiner als die Fläche des zweiten Scanbereichs 66 für den optischen Messstrahl 36. Damit kann der Bereich, in dem die Dampfkapillare gesucht wird, eingeschränkt werden, und die Suche kann beschleunigt werden, im Vergleich zum Fall, dass für die Suche der gesamte zweite Scanbereich 66 verwendet wird.

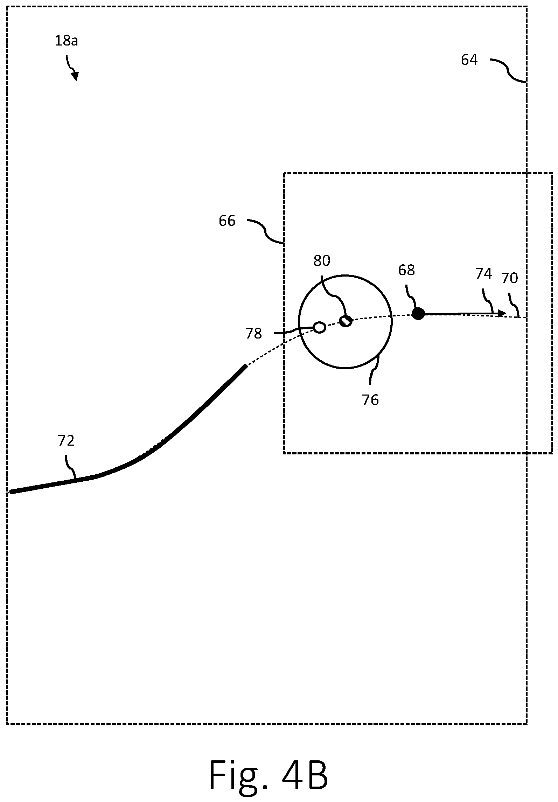

Fig. 4B zeigt einen Fall, bei dem der Abtastbereich 76 an die Position 68 des Bearbeitungslaserstrahls 14 angepasst wird. Gegenüber Fig. 4A wurde der Bearbeitungslaserstrahl 14 entlang des Bearbeitungspfads 70 weiter abgelenkt. Damit hat sich die Position 68 des Bearbeitungslaserstrahls 14 und die Bearbeitungsrichtung 74 verändert. Insbesondere liegt die Position 68 des Bearbeitungslaserstrahls 14 näher am rechtsseitigen Rand des ersten Scanbereichs 64.

Im Vergleich zu Fig. 4A wurde dementsprechend die Position des Abtastbereichs 76 basierend auf der veränderten Position des Bearbeitungslaserstrahls 14 und der veränderten Bearbeitungsrichtung 74 angepasst. Ferner wurde gegenüber Fig. 4A der Abtastbereich 76 vergrößert. Dies hat damit zu tun, dass am Rand des ersten Scanbereichs 64 optische Fehler und Einflüsse der ersten Ablenkvorrichtung 26 und der Fokussieroptik 24 auf den optischen Messstrahl 36, die typischerweise lediglich für den Bearbeitungslaserstrahl 14 optimiert sind, zunehmen. Um sicherzustellen, dass die tatsächliche Position 78 der Dampfkapillare stets innerhalb des Abtastbereichs 76 liegt, kann die Größe des Abtastbereichs 76 zunehmen, wenn der Abstand zwischen der Position 68 des Bearbeitungslaserstrahls 14 und dem Rand des ersten Scanbereichs 64 abnimmt. Die Größe des Abtastbereichs 76 ist aber dennoch kleiner als die Größe des zweiten Scanbereichs 66. Gemäß Ausführungsformen kann also mit einer zunehmenden Ablenkung des Bearbeitungslaserstrahls 14 durch die erste Ablenkvorrichtung 26, also mit zunehmenden Ablenkwinkel entlang der x- und/oder y-Achse, die Größe des Abtastbereichs 76 zunehmen.

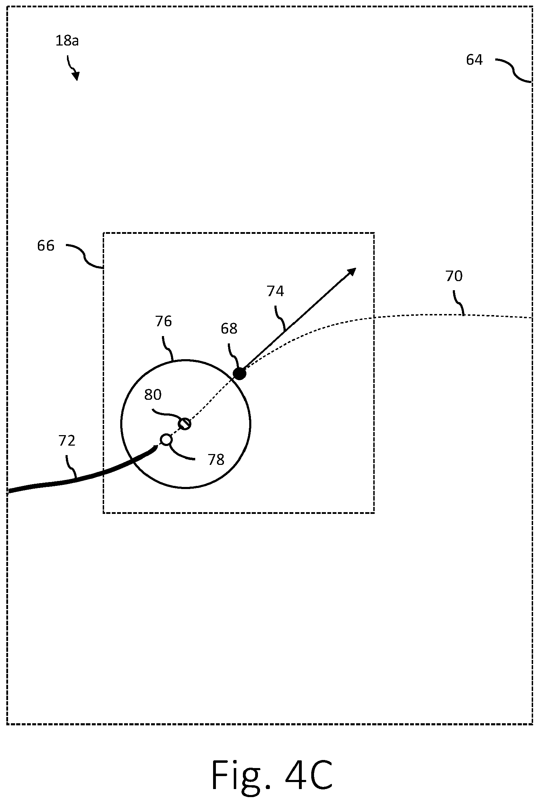

In Fig. 4C wurde die Bearbeitungsgeschwindigkeit erhöht. Mit anderen Worten wurde der Betrag des Bearbeitungsgeschwindigkeitsvektors 74 erhöht. Wie zu erkennen ist, wurde gegenüber dem Fall von Fig. 4A die Fläche des Abtastbereichs 76 vergrößert. Der Abtastbereich 76 ist in Fig. 4C aber dennoch kleiner als der zweite Scanbereich 66. Außerdem wurde aufgrund der höheren Bearbeitungsgeschwindigkeit der Abstand zwischen der Position des Abtastbereichs 76 und der Position 68 des Bearbeitungslaserstrahls 14 erhöht. Dies beruht auf der Erkenntnis, dass sich mit zunehmender Bearbeitungsgeschwindigkeit der Abstand oder Versatz zwischen der theoretischen Position 80 der Dampfkapillare und der Position 68 des Bearbeitungslaserstrahls 14 vergrößert.

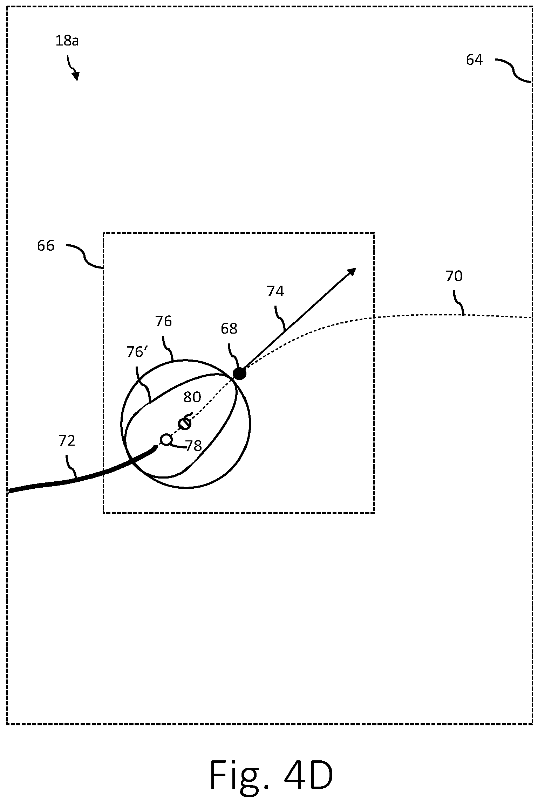

Fig. 4D zeigt einen Fall, bei dem gegenüber Fig. 4C ferner die Form oder Geometrie des Abtastbereichs 76' angepasst wurde. In Fig. 4D weist der Abtastbereich 76' eine Tropfenform auf. Gemäß anderen Ausführungsformen kann der Abtastbereich eine ovale Form, eine EiForm, eine elliptische Form, eine Trapezform oder eine Dreiecksform aufweisen. In Fig. 4D ist zusätzlich der Abtastbereich 76 der Fig. 4C eingezeichnet. Der Abtastbereich 76' weist zwar im Wesentlichen dieselbe Länge wie der Abtastbereich 76 auf. Die Breite des Abtastbereichs 76' ist gegenüber dem Abtastbereich 76 jedoch reduziert. Demnach kann die abzusuchende Fläche zur Erfassung der Position und Tiefe der Dampfkapillare weiter optimiert und reduziert werden.

Fig. 5 veranschaulicht einen Abtastpfad 82 innerhalb des bestimmten bzw. angepassten Abtastbereichs 76 der Fig. 4A. Ausgehend von der theoretischen Position 80 der Dampfkapillare wird die Oberfläche des Werkstücks 18a durch Ablenken der Position 83 des optischen Messstrahls 36 auf dem Werkstück 18a, 18b entlang des zickzackförmigen Abtastpfads 82 abgetastet, um Abstands-Messwerte für die Bestimmung der Position 78 der Dampfkapillare und der Tiefe der Dampfkapillare zu erfassen. Der Abtastpfad beginnt also beispielsweise bei der theoretischen Position 80 der Dampfkapillare. Der Abtastpfad kann auch spiralförmig nach außen verlaufen, vorzugsweise mit Ursprung an der theoretischen Position 80 der Dampfkapillare.

Gemäß Ausführungsformen kann das Verfahren zum Bestimmten der Position der Dampfkapillare bzw. der Tiefe der Dampfkapillare während des Laserbearbeitungsprozesses wiederholt oder iterativ durchgeführt werden, um die Position bzw. Tiefe einer sich bewegenden Dampfkapillare zuverlässig zu bestimmen. Beispielsweise kann die Dampfkapillare dem Bearbeitungslaserstrahl entlang des Bearbeitungspfads im Nachlauf folgen. Dazu wird beispielsweise in einem ersten Schritt die Position der Dampfkapillare wie vorstehend beschrieben bestimmt. In einem darauffolgenden zweiten Schritt wird die im ersten Schritt bestimmte Position der Dampfkapillare als Mittelpunkt für den Abtastbereich zum Bestimmen der Position und/oder Tiefe der Dampfkapillare im zweiten Schritt verwendet. Gemäß Ausführungsformen folgt die Position des Abtastbereichs also der Position des Bearbeitungslaserstrahls entlang des Bearbeitungspfads, wobei der Abtastbereich im Nachlauf des Bearbeitungslaserstrahls angeordnet ist.

Gemäß Ausführungsformen kann nach einem Chargenwechsel der Werkstücke 18a, 18b der Abtastbereich zunächst vergrößert werden. Dadurch kann eine etwaige Änderung der Dicke, des Materials oder anderer Parameter der Werkstücke 18a, 18b zwischen den Chargen berücksichtigt werden.

Gemäß Ausführungsformen wird beim Einstrahlen und Ablenken des optischen Messstrahls 36 auf dem Werkstück 18a durch die zweite Ablenkvorrichtung 52, d.h. beim Positionieren des optischen Messstrahls 36 auf dem Werkstück 18a, 18b, der chromatische Versatz zwischen dem optischen Messstrahl 36 und dem Bearbeitungslaserstrahl 14 von der Steuereinheit 62 bzw. von der zentralen Steuereinheit 60 berücksichtigt und vorgehalten. Dies kann beispielsweise dadurch passieren, dass dieser Versatz als Funktion der Wellenlängen des Bearbeitungslaserstrahls und des optischen Messstrahls sowie der Position des optischen Messstrahls 36 im ersten Scanfeld 64 durch Messungen oder Simulationen bestimmt und in der Steuereinheit, beispielsweise als Tabelle oder funktionaler Zusammenhang, hinterlegt wird. Beim Ablenken des optischen Messstrahls 36 entlang des Abtastpfads 82 kann der Versatz anschließend berücksichtigt und korrigiert werden. Der chromatische Versatz kann auch als chromatische Aberration des optischen Messstrahls 36 in Relation zum Bearbeitungslaserstrahl 14 bezeichnet werden und bedeutet eine chromatische Aberration des optischen Messstrahls 36 durch Elemente des Laserbearbeitungskopfes 16, die für den Bearbeitungslaserstrahl 14 ausgelegt und entworfen wurden. Die chromatische Aberration des optischen Messstrahls 36 beruht darauf, dass sich eine Wellenlänge des optischen Messstrahls 36 und eine Wellenlänge des Bearbeitungslaserstrahls 14 unterscheiden. Die chromatische Aberration des optischen Messstrahls 36 kann beispielsweise durch die Fokussieroptik 24 hervorgerufen werden.

Gemäß weiteren Ausführungsformen wird die Fokussierung des optischen Messstrahls 36 je nach seiner Position im ersten Scanfeld 64 angepasst oder korrigiert. Dies kann z.B. durch Bewegen der Kollimatoroptik 50 erfolgen. Insbesondere kann dies durch eine sogenannte motorische Kollimation geschehen. Die Anpassung der Fokussierung bzw. die motorische Kollimation kann ebenfalls als Funktion der Prozessparameter gesteuert werden. Dieses Vorgehen ist auch bei Verwendung einer F-Theta-Optik für die Fokussieroptik 22 vorteilhaft, da eine solche Optik in der Regel nur für die Wellenlänge des Bearbeitungslaserstrahls 14 ausgelegt und optimiert wird.

Vorzugsweise umfasst das Laserbearbeitungssystem 10 weitere Sensoren, beispielsweise Photodioden, Pyrometer und/oder eine Kamera. Diese können dazu verwendet werden, um basierend auf den durch die Messvorrichtung 34 erfassten Abstands-Messwerten diejenigen zu bestimmen oder herauszufiltern, die einen Abstand zum Keyholeboden bzw. zur tiefsten Stelle der Dampfkapillare angeben oder repräsentieren. Hierfür können ggf. auch Methoden der künstlichen Intelligenz zum Einsatz kommen, als Beispiel seien hierzu neuronale Netze genannt, welche mit experimentellen Daten hierzu trainiert werden.

Gemäß Ausführungsformen weist das Laserbearbeitungssystem 10 ferner eine Schnittstelle auf, um Daten, beispielsweise die bestimmte Position 78 und/oder Tiefe der Dampfkapillare an ein externes System zu übermitteln.

Die vorliegende Offenbarung umfasst ein Verfahren und ein Laserbearbeitungssystem zum Laserstrahlschweißen mit einem Scannersystem, wobei die Tiefe und Position der Dampfkapillare während des Laserstrahlschweißprozesses mit Hilfe von OCT-Messungen ermittelt wird. Das Scannersystem beinhaltet einen ersten Scanner zum Auslenken des Bearbeitungslaserstrahls sowie des OCT-Messstrahls und einen zweiten Scanner zum Auslenken des OCT-Messstrahls sowie eine Steuereinheit für den zweiten Scanner, welche den Scanbereich des OCT-Messstrahls in Abhängigkeit verschiedener Prozessparameter bestimmt.

## Patentansprüche

1. Verfahren zum Überwachen eines Laserbearbeitungsprozesses, insbesondere eines Laserschweißprozesses, umfassend:
- Einstrahlen eines Bearbeitungslaserstrahls (14) auf zumindest ein Werkstück (18a, 18b) zum Ausbilden der Dampfkapillare, wobei der Bearbeitungslaserstrahl (14) durch eine erste Ablenkvorrichtung (26) entlang eines Bearbeitungspfads (70) innerhalb eines ersten Scanfelds (64) der ersten Ablenkvorrichtung (26) auf dem Werkstück (18a, 18b) abgelenkt wird,
- Einstrahlen eines optischen Messstrahls (36) auf das Werkstück (18a, 18b), wobei der optische Messstrahl (36) durch eine zweite Ablenkvorrichtung (52) relativ zum Bearbeitungslaserstrahl (14) und anschließend zusammen mit dem Bearbeitungslaserstrahl (14) durch die erste Ablenkvorrichtung (26) abgelenkt wird, wobei der optische Messstrahl (36) durch die zweite Ablenkvorrichtung (52) entlang eines Abtastpfads (82) innerhalb eines Abtastbereichs (76) auf dem Werkstück (18a, 18b) abgelenkt wird,
- Erfassen von Abstands-Messwerten entlang des Abtastpfads (82) basierend auf einem von dem Werkstück (18a, 18b) reflektierten Anteil des optischen Messstrahls (36),
- Bestimmen einer Tiefe und/oder einer Position der Dampfkapillare basierend auf den erfassten Abstands-Messwerten,
wobei die Größe des Abtastbereichs (76) basierend auf einer Position (68) des Bearbeitungslaserstrahls (14) im ersten Scanfeld (64) angepasst wird.

2. Verfahren nach Anspruch 1, wobei ferner eine Position und/oder eine Form des Abtastbereichs (76) basierend auf der Position (68) des Bearbeitungslaserstrahls (36) im ersten Scanfeld (64) angepasst wird, und/oder
wobei eine Position, die Größe und/oder eine Form des Abtastbereichs (76) basierend auf einer Bearbeitungsgeschwindigkeit entlang des Bearbeitungspfads (70) angepasst wird.

3. Verfahren nach einem der vorstehenden Ansprüche, ferner umfassend das Bestimmen einer theoretischen Position (80) der Dampfkapillare und das Bestimmen einer Position des Abtastbereichs (76) basierend auf der bestimmten theoretischen Position (80) der Dampfkapillare.

4. Verfahren nach einem der vorstehenden Ansprüche, wobei der Bearbeitungslaserstrahl (14) entlang des Bearbeitungspfads (70) ohne Überlagerung einer oszillierenden Bewegung bewegt wird und/oder wobei der Bearbeitungslaserstrahl (14) entlang des Bearbeitungspfads (70) allein durch Ablenkung mittels der ersten Ablenkvorrichtung (26) bewegt wird und/oder wobei ein Laserbearbeitungskopf, durch den der Bearbeitungsstrahl (14) auf das Werkstück eingestrahlt wird, während des Laserbearbeitungsprozesses stationär zum Werkstück bleibt..

5. Verfahren nach einem der vorstehenden Ansprüche, wobei eine Größe des Abtastbereichs (76) umso größer bestimmt wird, je näher die Position (68) des Bearbeitungslaserstrahls (14) an einem Rand des ersten Scanfelds (64) liegt und/oder je größer eine Bearbeitungsgeschwindigkeit ist, und/oder
wobei ein Abstand zwischen der Position des Abtastbereichs (76) und der Position (68) des Bearbeitungslaserstrahls (14) umso größer bestimmt wird, je größer eine Bearbeitungsgeschwindigkeit ist.

6. Verfahren nach einem der vorstehenden Ansprüche, wobei die Position, die Form und/oder die Größe des Abtastbereichs (76) derart bestimmt wird, dass die Position (68) des Bearbeitungslaserstrahls (14) außerhalb des Abtastbereichs (76) liegt.

7. Verfahren nach einem der vorstehenden Ansprüche, wobei die zweite Ablenkvorrichtung (52) ein zweites Scanfeld (66) aufweist, das kleiner als das erste Scanfeld (64) ist.

8. Verfahren nach einem der vorstehenden Ansprüche, wobei die Position (68) des Bearbeitungslaserstrahls (14) eine aktuelle Position des Bearbeitungslaserstrahls (14) während des Laserbearbeitungsprozesses ist, und/oder
wobei der Abtastbereich (76) in Echtzeit bestimmt wird.

9. Verfahren nach einem der vorstehenden Ansprüche, wobei der Abtastbereich (76), insbesondere die Position, die Form und/oder die Größe des Abtastbereichs (76), und/oder eine theoretische Position (80) der Dampfkapillare basierend auf zumindest einem der folgenden bestimmt wird:
eine Bearbeitungsrichtung (749), ein Geschwindigkeitsvektor des Bearbeitungslaserstrahls, eine Leistung des Bearbeitungslaserstrahls (14), ein Material und/oder Dicke des zumindest einen Werkstücks (18a, 18b), ein Ablenkwinkel der ersten Ablenkvorrichtung (26), eine optische Weglänge des Bearbeitungslaserstrahls (14) zwischen einer Laserquelle (12) für den Bearbeitungslaserstrahl (14) und dem zumindest einen Werkstück (18a, 18b), eine optische Weglänge des optischen Messstrahls (36) zwischen einer Strahlungsquelle des optischen Messstrahls (36) und dem zumindest einen Werkstück (18a, 18b), eine Fokuslage des Bearbeitungslaserstrahls (14), eine Fokuslage des optischen Messstrahls (36), eine Querschnittsform des Bearbeitungslaserstrahls (14) im Fokus, eine Querschnittsform des optischen Messstrahls (36) im Fokus, und eine Ausrichtung des Laserbearbeitungssystems (10), insbesondere von einem Laserbearbeitungskopf (16) des Laserbearbeitungssystems (10), und des zumindest einen Werkstücks (18a, 18b) zueinander.

10. Verfahren nach einem der vorstehenden Ansprüche, wobei der Abtastpfad (82) innerhalb des Abtastbereichs (76) die Form einer 8, einer liegenden 8, einer Hantel, einer Erdnuss, einer Spirale, eines Kreises, eines Kreisbogens, eine Zickzackform, und/oder eine mäandernde Form aufweist.

11. Verfahren nach einem der vorstehenden Ansprüche, wobei der Abtastbereich (76) basierend auf Tabellenwerten und/oder unter Verwendung eines künstlichen neuronalen Netzes und/oder basierend auf einem funktionalen Zusammenhang bestimmt wird.

12. Verfahren nach einem der vorausgehenden Ansprüche, wobei das zumindest eine Werkstück (18a, 18b) eine Batteriezelle umfasst und das Einstrahlen des Bearbeitungslaserstrahls (14) zum Kontaktieren der Batteriezelle erfolgt.

13. Laserbearbeitungssystem (10), insbesondere Laserschweißsystem, umfassend:
- einen Laserbearbeitungskopf (16) zum Einstrahlen eines Bearbeitungslaserstrahls (12) auf zumindest ein Werkstück (18a, 18b) zum Ausbilden einer Dampfkapillare, wobei der Laserbearbeitungskopf (16) eine erste Ablenkvorrichtung (26) zum Ablenken des Bearbeitungslaserstrahls (14) entlang eines Bearbeitungspfads (70) innerhalb eines ersten Scanfelds (64) auf dem Werkstück (18a, 18b) umfasst,
- eine Messvorrichtung (34) zur interferometrischen Abstandsmessung, die eingerichtet ist zum Einstrahlen eines optischen Messstrahls (36) auf das zumindest eine Werkstück (18a, 18b), und eine zweite Ablenkvorrichtung (52) zum Ablenken des optischen Messstrahls (36) relativ zum Bearbeitungslaserstrahl (14) entlang eines Abtastpfads (82) innerhalb eines Abtastbereichs (76) auf dem Werkstück (18a, 18b),
- eine Einkopplungsvorrichtung (56) zum Einkoppeln des optischen Messstrahls (36) in den Laserbearbeitungskopf (16), die in Strahlausbreitungsrichtung des Bearbeitungslaserstrahls (14) vor der ersten Ablenkvorrichtung (26) angeordnet ist, sodass der optische Messstrahl (36) zusammen mit dem Bearbeitungslaserstrahl (14) durch die erste Ablenkvorrichtung (26) auslenkbar ist,
wobei die Messvorrichtung (34) eingerichtet ist, Abstand-Messwerte entlang des Abtastpfads (82) basierend auf einem von dem Werkstück (18a, 18b) reflektierten Anteil des optischen Messstrahls (36) zum Bestimmen einer Tiefe und/oder einer Position (78) der Dampfkapillare zu erfassen, und die Größe des Abtastbereichs (76) basierend auf einer Position (68) des Bearbeitungslaserstrahls (14) innerhalb des ersten Scanfelds (64) anzupassen.

14. Laserbearbeitungssystem nach Anspruch 13, wobei die erste Ablenkvorrichtung (26) eingerichtet ist, um den Bearbeitungslaserstrahl (14) um einen maximalen ersten Ablenkwinkel (28) entlang einer ersten Achse (x) abzulenken und um den Bearbeitungslaserstrahl (14) um einen vorgegebenen maximalen zweiten Ablenkwinkel (29) entlang einer zweiten Achse (y) abzulenken, wobei die erste und die zweite Achse (x, y) zueinander senkrecht sind,
wobei das erste Scanfeld (64) durch den maximalen ersten Ablenkwinkel (28) und den maximalen zweiten Ablenkwinkel (29) vorgegeben ist, wobei der maximale erste Ablenkwinkel (28) und/oder der maximale zweite Ablenkwinkel (29) gleich oder größer als 10 Grad ist.

15. Laserbearbeitungssystem nach Anspruch 13 oder 14, wobei die Messvorrichtung (34) eine Kollimationsvorrichtung (48) zum Einstellen einer Fokuslage des optischen Messstrahls (36) umfasst, und eingerichtet ist, die Kollimationsvorrichtung (48) zu steuern, um die Fokuslage des optischen Messstrahls (36) basierend auf der Position des optischen Messstrahls (36) innerhalb des ersten Scanfelds (64) und/oder innerhalb des zweiten Scanfelds (66) einzustellen, und/oder
wobei die Messvorrichtung (34) ein optischer Kohärenztomograph ist oder diesen umfasst.
